# EUROPEAN PATENT APPLICATION

(11) **EP 4 810 571 A1**
(43) Date of publication of application: **23.09.2026**
(21) Application number: 24891486.3
(22) Date of filing: 15.11.2024
(51) Int. Cl.: C08L 101/00, C08K 3/04, C08K 3/013, C08K 9/02

(54) **RESIN COMPOSITION AND CURED PRODUCT**

(30) Priority: 17.11.2023 JP 2023195818
(71) Applicant: Dow Toray Co., Ltd., Tokyo 140-8617 (JP); Dow Silicones Corporation, Midland, Michigan 48686 (US); Dow Global Technologies LLC, Midland, MI 48674 (US)
(72) Inventor: FUKUI Hiroshi, Ichihara-shi, Chiba 299-0108 (JP); FUJISAWA Toyohiko, Ichihara-shi, Chiba 299-0108 (JP); KODAMA Harumi, Ichihara-shi, Chiba 299-0108 (JP); MORI Miki, Ichihara-shi, Chiba 299-0108 (JP); ZHU Bizhong, Auburn, Michigan 48686 (US); GRZESIAK Kathryn, Midland, Michigan 48674 (US)
(74) Representative: Elkington and Fife LLP
(86) International application number: PCT/JP2024/040544
(87) International publication number: WO 2025/105450

(57) **Abstract**

An object is to provide a resin composition that suppresses filler sedimentation and an excessive increase in viscosity, while also exhibiting excellent conductivity. The resin composition of the present invention contains a matrix resin and a main conductive filler (A) having metal on at least a portion of the surface. The resin composition contains a main conductive filler (A) in a prescribed proportion. The resin composition further contains at least one of a carbon-based conductive filler (B) having an aspect ratio of 50 or more and a carbon-based conductive filler (C) having a specific surface area of 10 m²/g or more, each in a prescribed proportion.

## Description

### TECHNICAL FIELD

The present invention relates to a resin composition and a cured product obtained by curing the resin composition.

### BACKGROUND ART

In recent years, techniques have been investigated for preparing resin compositions by adding various fillers to matrix resins in order to improve properties such as electrical conductivity, thermal conductivity, and mechanical strength.

For example, Patent Document 1 proposes creating a cured polymer composite by adding a prescribed filler to a cured polymer such as a siloxane polymer. According to Patent Document 1, the polymer composite exhibits excellent tensile strength, hardness, conductivity, and the like.

### RELATED ART DOCUMENTS

### Patent Documents

Patent Document 1: JP PCT 2023-516923 A

### SUMMARY OF THE INVENTION

### PROBLEM TO BE SOLVED BY THE INVENTION

Conventionally, fillers having metal on at least a portion of the surface have been added to the matrix resin in order to impart conductivity to resin compositions and cured products thereof. However, such resin compositions had problems causing difficulty in handling, such as filler settling or an excessive increase in viscosity of the resin composition itself.

Therefore, the present invention aims to provide a resin composition and a cured product. In some embodiments, the present invention aims to provide a resin composition that suppresses filler sedimentation and an excessive increase in viscosity and also exhibits excellent conductivity, and a cured product obtained by curing the resin composition.

### MEANS FOR SOLVING THE PROBLEM

The present inventors conducted thorough research to achieve the above object. Furthermore, the present inventors discovered that by incorporating at least one of a carbon-based conductive filler with an aspect ratio of 50 or more and a carbon-based conductive filler with a specific surface area of 10 m²/g or more into a resin composition containing a matrix resin and a filler having metal on at least a portion of the surface while satisfying prescribed conditions, both filler sedimentation and an excessive increase in viscosity in the resin composition can be suppressed while exhibiting excellent conductivity, thus achieving the present invention.

In other words, the present invention provides the resin compositions [1] to [14] described below, and the cured product [15].
[1] A resin composition, comprising: a matrix resin, and a main conductive filler (A) having a metal on at least a portion of the surface, wherein
   the proportion of the main conductive filler (A) is 19.80 vol.% or more and 35.20 vol.% or less when the total volume of the resin composition is 100 vol.%, and the following conditions (1), (2), or (3) are satisfied.
   Condition (1): The resin composition contains both a carbon-based conductive filler (B) with an aspect ratio of 50 or more and a carbon-based conductive filler (C) with a specific surface area of 10 m²/g or more;
   when the total volume of the resin composition is 100 vol.%,
   the proportion of the carbon-based conductive filler (B) is 0.01 vol.% or more and less than 1.00 vol.%,
   the proportion of the carbon-based conductive filler (C) is greater than 0.10 vol.% and less than 2.00 vol.%, and
   the total of the proportion of the main conductive filler (A), the proportion of the carbon-based conductive filler (B), and the proportion of the carbon-based conductive filler (C) is greater than 20.60 vol.% and less than 36.50 vol.%;
   Condition (2): The resin composition contains a carbon-based conductive filler (C) with a specific surface area of 10 m²/g or more, and does not contain a carbon-based conductive filler (B) with an aspect ratio of 50 or more;
   when the total volume of the resin composition is 100 vol.%,
   the proportion of the carbon-based conductive filler (C) is greater than 1.00 vol.% and less than 6.00 vol.%,
   the total of the proportion of the main conductive filler (A) and the proportion of the carbon-based conductive filler (C) is greater than 21.00 vol.% and less than 38.00 vol.%;
   Condition (3): The resin composition contains a carbon-based conductive filler (B) with an aspect ratio of 50 or more, and does not contain a carbon-based conductive filler (C) with a specific surface area of 10 m²/g or more, and
   when the total volume of the resin composition is 100 vol.%,
   the proportion of the carbon-based conductive filler (B) is 0.10 vol.% or more and less than 2.50 vol.%, and
   the total of the proportion of the main conductive filler (A) and the proportion of the carbon-based conductive filler (B) is greater than 20.20 vol.% and less than 36.00 vol.%.
[2] The resin composition according to [1], wherein the main conductive filler (A) contains nickel-coated graphite.
[3] The resin composition according to [1] or [2], wherein the carbon-based conductive filler (B) contains a carbon nanostructure.
[4] The resin composition according to any one of [1] to [3], wherein the carbon-based conductive filler (C) contains carbon black.
[5] The resin composition according to any one of [1] to [4], wherein the matrix resin contains at least one type selected from the group consisting of silicone resin, epoxy resin, acrylic resin, polyolefin oxide resin, and urethane resin.
[6] The resin composition according to any one of [1] to [4], wherein the matrix resin contains at least one type selected from the group consisting of silicone resin, epoxy resin, and urethane resin.
[7] The resin composition according to any one of [1] to [6], further comprising a curing catalyst capable of curing the matrix resin.
[8] The resin composition according to any one of [1] to [7], further comprising a reinforcing filler.
[9] The resin composition according to any one of [1] to [8], further comprising an adhesion promoter, wherein the adhesion promoter contains both 3-methacryloxypropyltrimethoxysilane and tetraethoxysilane.
[10] The resin composition according to any one of [1] to [9], satisfying the above condition (1) or (2).
[11] The resin composition according to any one of [1] to [9], satisfying the above condition (1).
[12] The resin composition according to any one of [1] to [11], which is a two-component type.
[13] The resin composition according to any one of [1] to [12], which is curable.
[14] The resin composition according to any one of [1] to [13], which is curable at room temperature.
[15] A cured product obtained by curing the resin composition of [13] or [14].

### EFFECT OF THE INVENTION

The present invention provides a resin composition that suppresses filler sedimentation and an excessive increase in viscosity, and exhibits excellent conductivity, as well as a cured product obtained by curing the resin composition.

### DESCRIPTION OF THE PREFERRED EMBODIMENTS

An embodiment of the present invention will be described below in detail.

### Resin composition

The resin composition of the present invention contains a matrix resin and a main conductive filler (A) having metal on at least a portion of the surface. In addition, the resin composition of the present invention contains a carbon-based conductive filler (B) having an aspect ratio of 50 or more and/or a carbon-based conductive filler (C) having a specific surface area of 10 m²/g or higher. Furthermore, the resin composition of the present invention may optionally include components other than the matrix resin, the main conductive filler (A), and the carbon-based conductive fillers (B) and (C) (hereinafter referred to as "optional components"). Furthermore, the resin composition of the present invention satisfies any one of the following conditions (1) to (3). The resin composition of the present invention, with the aforementioned configuration, suppresses both filler sedimentation and an excessive increase in viscosity, and can exhibit excellent conductivity as a resin composition and/or the cured product thereof.

### Matrix resin

The matrix resin contained in the resin composition of the present invention is one of the main components of the resin composition. The matrix resin is not particularly limited so long as the main conductive filler (A) and the carbon-based conductive fillers (B) and/or (C) are well dispersed therein, and can be appropriately selected depending on the application of the resin composition. Preferred structures and properties of the matrix resin in one aspect of the present invention, are described below along with the proportion in the resin composition, but the present invention is not limited thereto.

### Structure and Properties

The molecular structure of the matrix resin is not particularly limited, and examples include linear, partially branched linear, branched, cyclic, network, and dendritic structures. Furthermore, if the resin composition of the present invention contains a plurality of types of matrix resins, their respective molecular structures may be the same or different.

In one embodiment of the present invention, the matrix resin may contain reactive functional groups in the molecule. The matrix resin has reactive functional groups, which allows various curing reactions to proceed smoothly and yield a cured product. Note that known functional groups that can participate in chemical reactions such as condensation reactions and addition reactions can be used as the reactive functional groups. Examples of such reactive functional groups include alkenyl groups such as vinyl groups, allyl groups, butenyl groups, pentenyl groups, and hexenyl groups; trialkoxysilyl groups such as trimethoxysilyl groups and triethoxysilyl groups; and epoxy groups. Note that the matrix resin may have only one type of reactive functional group in a single molecule, or may have two or more types of reactive functional groups.
The location of reactive functional groups in the matrix resin is not particularly limited. The polymer constituting the matrix resin may, for example, have reactive functional groups at the terminals of the molecular chains.
Furthermore, from the perspective of enhancing reactivity and enabling good curing, the matrix resin preferably has at least two reactive functional groups per molecule.

The viscosity of the matrix resin is not particularly limited, but is preferably 20 mPa·s or more, more preferably 100 mPa·s or more, even more preferably 500 mPa·s or more, and preferably 1,000,000 mPa·s or less, more preferably 100,000 mPa·s or less, even more preferably 10000 mPa·s or less, and particularly preferably 5000 mPa·s or less. If the viscosity of the matrix resin is 20 mPa·s or higher, filler sedimentation in the resin composition can be further suppressed, and the flexibility and elongation of the cured product obtained by curing the resin composition can be improved. On the other hand, if the viscosity of the matrix resin is 1,000,000 mPa·s or less, an excessive increase in viscosity of the resin composition can be sufficiently suppressed. Note that in the present specification, the "viscosity" of the matrix resin refers to the value measured at 25°C using a Type B viscometer in accordance with the provisions of JIS K 7117-1:1999.

### Types of Matrix Resins

As described above, the type of matrix resin is not particularly limited. Furthermore, the matrix resin may be used alone or in a combination of two or more types in any ratio.
For example, from the perspective of exhibiting adhesive properties, when using the resin composition of the present invention as an adhesive, the matrix resin is preferably a silicone resin (dimethylpolysiloxane, methylphenylpolysiloxane, diphenylpolysiloxane, or the like, which may have the reactive functional groups described above, and a portion or all of the hydrogen atoms may be substituted with halogen atoms such as fluorine), epoxy resin, acrylic resin, polyolefin oxide resin, urethane resin, or the like, as well as combinations thereof. Furthermore, in some embodiments, silicone resin, epoxy resin, urethane resin, or combinations thereof can be preferably used as the matrix resin.

### Proportion of Matrix Resin

Furthermore, the proportion of the matrix resin in the resin composition is preferably 10.00 mass% or more, more preferably 15.00 mass% or more, even more preferably 20.00 mass% or more, even more preferably 25.00 mass% or more, even more preferably 30.00 mass% or more, and preferably 60.00 mass% or less, more preferably 50.00 mass% or less, and even more preferably 40.00 mass% or less, based on the total mass of the resin composition as 100 mass%. If the proportion of matrix resin in the resin composition is 10.00 mass% or more, the resin composition can exhibit excellent adhesive properties. On the other hand, if the proportion of the matrix resin in the resin composition is 60.00 mass% or less, the conductivity of the resin composition will not decrease excessively.

### Main conductive filler (A)

The main conductive filler (A) is a conductive filler having metal on at least a portion of the surface, and is a component that can impart conductivity to the resin composition of the present invention. Note that the main conductive filler (A) may be used alone or in combination of two or more types in any ratio. Here, the main conductive filler (A) is not particularly limited so long as metal is provided on at least a portion of the outer surface, and may be a filler composed entirely of metal, or a filler in which a portion or all of the surface of a nonmetallic component is coated with metal.

The metals that can constitute the main conductive filler (A) are not particularly limited, but examples include nickel, silver, copper, tin, and cobalt. These metals may be used individually or in a combination of two or more in any ratio. Of these, nickel is preferred from the perspective of enabling the resin composition to exhibit even better conductivity.
Furthermore, the nonmetallic components that can constitute the main conductive filler (A) are not particularly limited, but examples include graphite, silica, alumina, talc, glass, plastic particles, and diamond. These nonmetallic components may be used individually or in a combination of two or more in any ratio. Of these, graphite is preferred from the perspective of enabling the resin composition to exhibit even better conductivity.
Furthermore, the main conductive filler (A) is preferably graphite with at least a portion of the surface coated with nickel (or in other words, nickel-coated graphite), from the perspective of enabling the resin composition to exhibit excellent conductivity.

Note that the shape of the main conductive filler (A) is not particularly limited and can take any shape, such as spherical, fibrous, plate-like, or amorphous.
Furthermore, when a two-dimensional cross-sectional image of the main conductive filler (A) is confirmed using a scanning electron microscope (SEM), in at least one cross-section, metal preferably constitutes (coated with metal) 30% or more, more preferably 50% or more, even more preferably 70% or more, and particularly preferably 90% or more, with the length of the outer circumference (surface) being 100%.
Furthermore, the volume-average particle diameter of the main conductive filler (A) is preferably 1 µm or more, more preferably 10 µm or more, even more preferably 50 µm or more, and preferably 1000 µm or less, more preferably 700 µm or less, and even more preferably 500 µm or less. If the volume-average particle size of the main conductive filler (A) is within the aforementioned range, filler sedimentation and an increase in viscosity of the resin composition can be further suppressed, while the resin composition can exhibit even better conductivity.
Note that in the present specification, "volume-average particle size" of various fillers refers to the particle diameter at which the cumulative volume calculated from the smallest diameter side accounts for 50% of the volume-based particle size distribution measured by laser diffraction.

Furthermore, the proportion of the main conductive filler (A) in the resin composition must be 19.80 vol.% or more and 35.20 vol.% or less, but is preferably 20.00 vol.% or more, more preferably 22.00 vol.% or more, even more preferably 24.00 vol.% or more, and preferably 35.00 vol.% or less, even more preferably 32.00 vol.% or less, and even more preferably 29.00 vol.% or less, based on a total volume of the resin composition being 100 vol.%. If the proportion of the main conductive filler (A) in the resin composition is less than 19.80 vol.%, the resin composition will not be able to exhibit sufficient conductivity. On the other hand, if the proportion of the main conductive filler (A) in the resin composition exceeds 35.20 vol.%, filler sedimentation of the resin composition cannot be suppressed, and the adhesive properties will decrease.

### Carbon-based conductive fillers (B) and (C)

The resin composition of the present invention must contain at least one of a carbon-based conductive filler (B) having an aspect ratio of 50 or more, and a carbon-based conductive filler (C) having a specific surface area of 10 m²/g or more.
These carbon-based conductive fillers are carbon materials with carbon as a main component (for example, the proportion of carbon is 90 mass% or more), and are components that can impart conductivity to the resin composition of the present invention, similar to the aforementioned main conductive filler (A). Furthermore, research by the present inventors has revealed that adding carbon-based conductive fillers (B) and/or (C) to the resin composition can suppress sedimentation of the main conductive filler (A), and can improve the adhesive properties of the resin composition. The reason for these effects is not clear, but presumably, these carbon-based conductive fillers have an aspect ratio or specific surface area above a prescribed value, which produces a reinforcing effect when dispersed in the matrix resin.

### Carbon-based conductive filler (B)

As described above, the aspect ratio of the carbon-based conductive filler (B) must be 50 or more, preferably 100 or more, more preferably 500 or more, and even more preferably 1000 or more. If the aspect ratio of the carbon-based conductive filler (B) is less than 50, the aforementioned reinforcing effect presumably does not occur, and filler sedimentation in the resin composition cannot be suppressed, and in addition, the adhesion of the resin composition decreases. Furthermore, there is no particular upper limit to the aspect ratio of the carbon-based conductive filler (B), but the aspect ratio can be, for example, 30000 or less.
Note that in the present specification, the "aspect ratio" of the filler can be determined by observing the filler using a SEM that measures the maximum diameter (major axis) and the particle diameter in a direction perpendicular to the maximum diameter (minor axis) for any 50 primary particles, and calculating the average value of the ratio of the major axis to minor axis (major axis/minor axis).

The carbon-based conductive filler (B) having the aforementioned aspect ratio is, for example, a fibrous or tubular carbon material having arbitrary branching, and a carbon nanostructure having a nanoscale outer diameter is preferred. Carbon nanostructures are not particularly limited and include, for example, carbon nanotubes (single-walled and multi-walled), carbon nanofibers, carbon nanoropes, carbon nanofibrils, carbon nanoneedles, carbon nanohorns, carbon nanocones, and carbon nanoscrolls. Note that the carbon-based conductive filler (B) may be used alone or in a combination of two or more types in any ratio.

### Carbon-based conductive filler (C)

As described above, the specific surface area of the carbon-based conductive filler (C) must be 10 m²/g or more, preferably 100 m²/g or more, more preferably 300 m²/g or more, even more preferably 600 m²/g or more, and particularly preferably 800 m²/g or more. If the specific surface area of the carbon-based conductive filler (C) is less than 10 m²/g, the aforementioned reinforcing effect is not expected to occur and filler sedimentation in the resin composition cannot be suppressed, and in addition, the adhesion of the resin composition decreases. Furthermore, there is no particular upper limit to the specific surface area of the carbon-based conductive filler (C), but for example, the upper limit can be 2000 m²/g or less.
Note that in the present specification, "specific surface area" of the filler refers to the nitrogen adsorption specific surface area measured using a BET method.

Furthermore, the shape of the carbon-based conductive filler (C) is not particularly limited, and can be any shape, but the aspect ratio is usually less than 50.

The carbon-based conductive filler (C) having the aforementioned specific surface area is preferably carbon black. The carbon black is not particularly limited and includes, for example, thermal black, acetylene black, channel black, furnace black, lamp black, and bone black. Note that the carbon-based conductive filler (C) may be used alone or in a combination of two or more types in any ratio.

### Conditions (1) to (3)

The resin composition of the present invention must satisfy one of the following conditions (1), (2), or (3) with respect to the main conductive filler (A), and the carbon-based conductive fillers (B) and (C).

### Condition (1)

A resin composition that satisfies condition (1) satisfies all of the following items [1-1] to [1-4].
[1-1] The resin composition contains both carbon-based conductive filler (B) and carbon-based conductive filler (C).
[1-2] The proportion of carbon-based conductive filler (B) is 0.01 vol.% or more and less than 1.00 vol.%, where the total volume of the resin composition is 100 vol.%.
[1-3] The proportion of carbon-based conductive filler (C) is greater than 0.10 vol.% and less than 2.00 vol.%, where the total volume of the resin composition is 100 vol.%.
[1-4] The sum of the proportion of the main conductive filler (A), the proportion of the carbon-based conductive filler (B), and the proportion of the carbon-based conductive filler (C) is greater than 20.60 vol.% and less than 36.50 vol.%, based on the total volume of the resin composition being 100 vol.%.

In condition (1), the proportion of the carbon-based conductive filler (B) specified in item [1-2] above must be 0.01 vol.% or more and less than 1.00 vol.%, with the total volume of the resin composition being 100 vol.%, as described above. The proportion may also be 0.02 vol.% or more, 0.05 vol.% or more, or more than 0.10 vol.%. Preferably, the proportion of the carbon-based conductive filler (B) is 0.15 vol.% or more, more preferably 0.20 vol.% or more, even more preferably 0.25 vol.% or more, and preferably 0.85 vol.% or less, even more preferably 0.70 vol.% or less, and even more preferably 0.55 vol.% or less. In condition (1), if the proportion of carbon-based conductive filler (B) is less than 0.01 vol.%, filler sedimentation in the resin composition cannot be suppressed, and the conductivity of the resin composition will be impaired. In addition, the adhesive properties of the resin composition are reduced. On the other hand, if the proportion of carbon-based conductive filler (B) is 1.00 vol.% or more, an increase in viscosity of the resin composition cannot be suppressed.

In condition (1), the proportion of the carbon-based conductive filler (C) specified in item [1-3] above must be greater than 0.10 vol% and less than 2.00 vol% when the total volume of the resin composition is 100 vol% as described above, but is preferably 0.50 vol% or more, more preferably 0.80 vol% or more, even more preferably 1.10 vol% or more, and preferably 1.90 vol% or less, more preferably 1.80 vol% or less, and even more preferably 1.70 vol% or less. In condition (1), if the proportion of carbon-based conductive filler (C) is 0.10 vol.% or less, filler sedimentation in the resin composition cannot be suppressed, and the conductivity of the resin composition will be impaired. In addition, the adhesive properties of the resin composition are reduced. On the other hand, if the proportion of carbon-based conductive filler (C) is 2.00 vol.% or more, an increase in viscosity of the resin composition cannot be suppressed.

In condition (1), the total proportion of the main conductive filler (A), and carbon-based conductive fillers (B) and (C) specified in item [1-4] above must be greater than 20.60 vol.% and less than 36.50 vol.% when the total volume of the resin composition is 100 vol.%, but is preferably 23.00 vol.% or more, more preferably 25.00 vol.% or more, even more preferably 27.00 vol.% or more, and preferably 34.00 vol.% or less, more preferably 32.00 vol.% or less, and even more preferably 30.00 vol.% or less. In condition (1), if the total proportion of the main conductive filler (A) and the carbon-based conductive fillers (B) and (C) is 20.60 vol.% or less, the conductivity of the resin composition will be impaired, but if the total proportion is 36.50 vol.% or more, an increase in viscosity of the resin composition cannot be suppressed.

Furthermore, in condition (1), the total proportion of carbon-based conductive fillers (B) and (C) is preferably 0.50 vol.% or more, more preferably 1.00 vol.% or more, even more preferably 1.30 vol.% or more, and preferably 2.50 vol.% or less, more preferably 2.20 vol.% or less, and even more preferably 2.00 vol.% or less, based on the total volume of the resin composition being 100 vol.%. In condition (1), if the total proportion of carbon-based conductive fillers (B) and (C) is 0.50 vol.% or more, filler sedimentation in the resin composition can be further suppressed, and the conductivity of the resin composition can be further improved. In addition, the resin composition can exhibit excellent adhesion to resin compositions. On the other hand, if the total proportion of carbon-based conductive fillers (B) and (C) is 2.50 vol.% or less, an increase in viscosity of the resin composition can be further suppressed.

Furthermore, in condition (1), the proportion of carbon-based conductive filler (C) to the proportion of carbon-based conductive filler (B) ((C)/(B)) may be 1.0 times or more, 2.0 times or more, or 3.0 times or more, on a volume basis, and at the same time may be 100.0 times or less, 50.0 times or less, 30.0 times or less, 20.0 times or less, 10.0 times or less, 8.0 times or less, or 6.0 times or less. If the volume ratio of (C)/(B) is within the aforementioned range, both carbon-based conductive fillers (B) and (C) are expected to exhibit the reinforcing effect described above, and thus the adhesion of the resin composition can be improved while further suppressing filler sedimentation and an increase in viscosity of the resin composition.

### Condition (2)

A resin composition that meets condition (2) satisfies all of the following items [2-1] to [2-3].
[2-1] The resin composition contains the carbon-based conductive filler (C) but does not contain the carbon-based conductive filler (B).
[2-2] The proportion of carbon-based conductive filler (C) is greater than 1.00 vol.% and less than 6.00 vol.%, when the total volume of the resin composition is 100 vol.%.
[2-3] If the total volume of the resin composition is 100 vol.%, the total of the proportion of the main conductive filler (A) and the proportion of the carbon-based conductive filler (C) is greater than 21.00 vol.% and less than 38.00 vol.%.

In condition (2), the proportion of the carbon-based conductive filler (C) specified in item [2-2] above must be greater than 1.00 vol% and less than 6.00 vol% when the total volume of the resin composition is 100 vol%, as described above, but is preferably 1.10 vol% or more, more preferably 1.20 vol% or more, even more preferably 1.30 vol% or more, and preferably 5.00 vol% or less, more preferably 4.00 vol% or less, even more preferably 3.00 vol% or less, and particularly preferably 2.50 vol% or less. In condition (2), if the proportion of carbon-based conductive filler (C) is 1.00 vol.% or less, filler sedimentation in the resin composition cannot be suppressed, and the conductivity of the resin composition will be impaired. In addition, the adhesive properties of the resin composition are reduced. On the other hand, if the proportion of carbon-based conductive filler (C) is 6.00 vol.% or more, an increase in viscosity of the resin composition cannot be suppressed.

In condition (2), the total proportion of the main conductive filler (A) and carbon-based conductive filler (C) specified in item [2-3] above must be greater than 21.00 vol.% and less than 38.00 vol.% when the total volume of the resin composition is 100 vol.%, but is preferably 23.00 vol.% or more, more preferably 25.00 vol.% or more, even more preferably 27.00 vol.% or more, and preferably 34.00 vol.% or less, more preferably 32.00 vol.% or less, and even more preferably 30.00 vol.% or less. In condition (2), if the total proportion of the main conductive filler (A) and the carbon-based conductive filler (C) is 21.00 vol.% or less, the conductivity of the resin composition will be impaired, but if the total proportion is 38.00 vol.% or more, an increase in viscosity of the resin composition cannot be suppressed.

### Condition (3)

A resin composition that meets condition (3) satisfies all of the following items [3-1] to [3-3].
[3-1] The resin composition contains the carbon-based conductive filler (B) but does not contain the carbon-based conductive filler (C).
[3-2] The proportion of carbon-based conductive filler (B) is 0.10 vol.% or more and less than 2.50 vol.%, where the total volume of the resin composition is 100 vol.%.
[3-3] If the total volume of the resin composition is 100 vol.%, the total of the proportion of the main conductive filler (A) and the proportion of the carbon-based conductive filler (B) is greater than 20.20 vol.% and less than 36.00 vol.%.

In condition (3), the proportion of the carbon-based conductive filler (B) specified in item [3-2] above must be 0.10 vol% or more and less than 2.50 vol% when the total volume of the resin composition is 100 vol% as described above, but is preferably 0.20 vol% or more, more preferably 0.25 vol% or more, and preferably 2.00 vol% or less, more preferably 1.00 vol% or less, even more preferably 0.70 vol% or less, and yet even more preferably 0.50 vol% or less. In condition (3), if the proportion of carbon-based conductive filler (B) is less than 0.10 vol.%, filler sedimentation in the resin composition cannot be suppressed, and the conductivity of the resin composition will be impaired. In addition, the adhesive properties of the resin composition are reduced. On the other hand, if the proportion of carbon-based conductive filler (B) is 2.50 vol.% or more, an increase in viscosity of the resin composition cannot be suppressed.

Furthermore, in condition (3), the total proportion of the main conductive filler (A) and the carbon-based conductive filler (B) specified in item [3-3] above must be greater than 20.20 vol.% and less than 36.00 vol.%, preferably 20.30 vol.% or more and preferably 35.50 vol.% or less, with the total volume of the resin composition being 100 vol.%. In condition (3), if the total proportion of the main conductive filler (A) and the carbon-based conductive filler (B) is 20.20 vol.% or less, the conductivity of the resin composition will be impaired, but if the total proportion is 36.00 vol.% or more, an increase in viscosity of the resin composition cannot be suppressed.

Note that the resin composition of the present invention only needs to satisfy any one of the above conditions (1) to (3). However, from the perspective of further suppressing filler sedimentation and an increase in viscosity of the resin composition, further improving conductivity, and exhibiting excellent adhesion to the resin composition, satisfying conditions (1) or (2) is preferable, and satisfying condition (1) is more preferable.
In addition, the resin composition of the present invention satisfying condition (1) has an advantage that favorable conductivity is sufficiently maintained even when the resin composition and cured product thereof are exposed to high temperature and high humidity conditions for a long period of time.

### Optional Components

The resin composition of the present invention may optionally contain components other than the matrix resin, main conductive filler (A), and carbon-based conductive fillers (B) and (C) described above, and these components can be appropriately selected depending on the application of the resin composition and the desired properties. The following are examples of optional components that can be used. Note that although the present invention sometimes describes the optional components using a silicone resin as the matrix resin as an example, this is not a limitation.

### Reinforcing filler

The resin composition of the present invention may optionally contain a reinforcing filler. The reinforcing filler can impart mechanical strength to the cured product obtained by curing the resin composition of the present invention, and can improve the performance as a protective agent or adhesive. Note that reinforcing fillers are typically non-conductive. Furthermore, in the present specification, fillers corresponding to the aforementioned main conductive filler (A) and carbon-based conductive fillers (B) and (C) are not classified as reinforcing fillers, even if these fillers can impart mechanical strength like the reinforcing fillers described above.
The reinforcing fillers are preferably inorganic fillers, and examples include fumed silica fine powder, precipitated silica fine powder, calcined silica fine powder, fumed titanium dioxide fine powder, quartz fine powder, calcium carbonate fine powder, diatomaceous earth fine powder, aluminum oxide fine powder, aluminum hydroxide fine powder, zinc oxide fine powder, and zinc carbonate fine powder. Note that the reinforcing filler may be used individually or in a combination of two or more types in any ratio.
Furthermore, the reinforcing filler may be surface-treated with a surface treating agent such as a siloxane oligomer. Examples of siloxane oligomers that can be used as surface treatment agents include: organoalkoxysilanes such as methyltrimethoxysilane; organohalosilanes such as trimethylchlorosilane; organosilazanes such as hexamethyldisilazane; α,ω-silanol group-blocked dimethylsiloxane oligomers; α,ω-silanol group-blocked methylphenylsiloxane oligomers; and siloxane oligomers such as α,ω-silanol group-blocked methylvinylsiloxane oligomers. Note that the surface treatment agent may be used individually or in a combination of two or more types in any ratio.

The volume-average particle size (primary average particle diameter) of the reinforcing filler is not particularly limited, but can be in a range of 0.005 µm to 1000 µm, for example.
Furthermore, the proportion of the reinforcing filler in the resin composition of the present invention is not particularly limited, but can be, for example, 0.10 vol.% to 5.00 vol.%, with the total volume of the resin composition being 100 vol.%.

### Curing catalyst

If the resin composition of the present invention is curable, the resin composition may optionally contain a curing catalyst. The type of curing catalyst is not particularly limited so long as the curing catalyst can cure the matrix resin, and should be appropriately selected according to the type of matrix resin and the curing reaction. The curing reaction of the matrix resin is not particularly limited, and examples include addition reactions such as: hydrosilylation reactions; condensation reactions; and ring-opening reactions, and these reactions may be used in combination. For example, when the resin composition of the present invention includes a silicone resin as the matrix resin, a hydrosilylation reaction or a condensation reaction is preferably used as the curing reaction, and a combination thereof is even more preferable. The catalyst used in the hydrosilylation reaction (hereinafter referred to as "hydrosilylation reaction catalyst") and the catalyst used in the condensation reaction (hereinafter referred to as "condensation reaction catalyst") will be described below in detail.

### Hydrosilylation reaction catalyst

The hydrosilylation reaction catalyst contains an alkenyl group and a hydrogen atom directly bonded to a silicon atom (hereinafter referred to as "silicon atom-bonded hydrogen atom"). This can promote the hydrosilylation reaction between the two components, thereby curing the resin composition. Examples of the hydrosilylation reaction catalyst include: platinum-based catalysts such as platinum black, platinum-supported activated carbon, platinum-supported silica powder, chloroplatinic acid, alcoholic solutions of chloroplatinic acid, platinum olefin complexes, and platinum vinylsiloxane complexes; palladium-based catalysts such as tetrakis(triphenylphosphine)palladium; rhodium-based catalysts; iron-based catalysts; ruthenium-based catalysts; and iron/cobalt-based catalysts. Furthermore, these hydrosilylation reaction catalysts may be in the form of fine particles dispersed or encapsulated in a thermoplastic resin, from the perspective of improving handling ease and the pot life of the resin composition.
Note that the hydrosilylation reaction catalyst may be used alone or in a combination of two or more catalysts in any ratio. The hydrosilylation reaction catalyst is preferably a platinum-based catalyst.
The amount of the hydrosilylation reaction catalyst in the resin composition of the present invention is not particularly limited, so long as being an amount sufficient to function as a curing catalyst (hereinafter referred to as "catalytic amount"), and the amount can be appropriately selected according to the desired curing conditions, but for example, the amount can be 1 ppm by mass or more and 1000 ppm by mass or less, with respect to the silicone resin used as the matrix resin as described above.

### Condensation reaction catalyst

The condensation reaction catalyst can promote a de-alcoholization condensation reaction between alkoxysilyl groups, thereby curing the resin composition. By using the condensation reaction catalyst in combination with the hydrosilylation reaction catalyst described above, the curability of the resin composition containing the silicone resin can be improved at temperatures ranging from room temperature to 50°C or below, and the resin composition can also exhibit excellent adhesion.
Examples of the condensation reaction catalyst include: tin compounds such as dimethyltin dineodecanoate and stannous octoate; titanium compounds such as tetra(isopropoxy)titanium, tetra(n-butoxy)titanium, tetra(t-butoxy)titanium, di(isopropoxy)bis(ethylacetoacetate)titanium, di(isopropoxy)bis(methylacetoacetate)titanium, titaniumtetraacetylacetonate, and di(isopropoxy)bis(acetylacetonate)titanium; aluminum compounds such as aluminum trisacetylacetonate, aluminum trisacetriacetate, and tris(sec-butoxy)aluminum; nickel compounds such as nickel bisacetylacetonate; cobalt compounds such as cobalt trisacetylacetonate; zinc compounds such as zinc bisacetylacetonate; and zirconium compounds such as zirconium tetra-n-propoxide, zirconium tetra-n-butoxide, zirconium tetraacetylacetonate, zirconium tributoxymonoacetylacetonate, zirconium monobutoxyacetylacetonate, zirconium dibutoxybis(ethylacetoacetate), zirconium tetraacetylacetonate, and zirconium tributoxymono stearate.
Note that the condensation reaction catalyst may be used alone or in a combination of two or more catalysts in any ratio. Furthermore, titanium compounds are preferred as the condensation reaction catalyst.
The amount of condensation reaction catalyst in the resin composition of the present invention is not particularly limited, so long as the amount is a catalytic amount, and can be appropriately selected according to the desired curing conditions. For example, the amount can be 0.01 parts by mass or more and 5 parts by mass or less per 100 parts by mass of the matrix resin described above.

### Crosslinking agent

The resin composition of the present invention may optionally contain a crosslinking agent. Preferably, the crosslinking agent has three or more crosslinking reaction sites, such as alkenyl groups (vinyl groups or the like) and silicon atom-bonded hydrogen atoms, and can react with the matrix resin or the like in the curing reaction carried out by the curing catalyst described above to form a three-dimensional crosslinked structure. Preferred examples of these crosslinking agents include Si-H crosslinking agents having three or more silicon atom-bonded hydrogen atoms in each molecule, and vinyl crosslinking agents having three or more vinyl groups in each molecule. Note that the crosslinking agent may be used individually or in a combination of two or more types in any ratio.

### Si-H crosslinking agent

If the resin composition contains an Si-H crosslinking agent, the Si-H crosslinking agent can undergo a hydrosilylation reaction with the alkenyl groups, for example, present in the silicone resin, to form a three-dimensional high-density crosslinked structure. Furthermore, as a result, the resin composition can exhibit excellent adhesion, and the strength of the cured product formed from the resin composition can be increased.

Here, a chain-like organopolysiloxane having three or more silicon atom-bonded hydrogen atoms in one molecule is preferably used as the Si-H crosslinking agent. Exemplary organic groups bonded to silicon atoms in the chain-like organopolysiloxane may include monovalent hydrocarbon groups not having an aliphatic unsaturated bond such as an alkyl group, cycloalkyl group, aryl group, aralkyl group, and halogenated alkyl group, but an alkyl group or aryl group is preferable, and a methyl group or phenyl group is particularly preferable.
Furthermore, examples of the chain structure of the aforementioned chain-like organopolysiloxane include linear, partially branched linear, and branched chain structures, with linear structures being preferred.
Note that the viscosity of the Si-H crosslinking agent, such as the chain-like organopolysiloxane, is not particularly limited, but is preferably 1 mPa·s or more and 10,000 mPa·s or less. The viscosity of the Si-H crosslinking agent can be measured using the same method as described above for the "matrix resin".

Examples of chain-like organopolysiloxanes having three or more silicon atom-bonded hydrogen atoms in one molecule include methylhydrogenpolysiloxane blocked with trimethylsiloxy groups at both terminals of the molecular chain, methylhydrogensiloxane/dimethylsiloxane copolymers blocked with trimethylsiloxy groups at both terminals of the molecular chain, and methylhydrogensiloxane/dimethylsiloxane copolymers blocked with dimethylhydrogensiloxy groups at both terminals of the molecular chain. These chain-like organopolysiloxanes may be used individually or in a combination of two or more in any ratio. Furthermore, of these, a methylhydrogensiloxane/dimethylsiloxane copolymer blocked with trimethylsiloxy groups at both terminals of the molecular chain is preferred from the perspective of providing excellent adhesion to the resin composition.

Furthermore, while the proportion of the Si-H crosslinking agent in the resin composition is not particularly limited, from the perspective of exhibiting excellent adhesion to the resin composition, the proportion is preferably 0.10 mass% or more, more preferably 0.40 mass% or more, and preferably 1.50 mass% or less, and more preferably 1.20 mass% or less, based on the total mass of the resin composition being 100 mass%.

### Vinyl Crosslinking Agent

If the resin composition contains a vinyl crosslinking agent, for example, the vinyl crosslinking agent will also react during the hydrosilylation reaction between the silicon atom bonded hydrogen atoms of the Si-H crosslinking agent and the alkenyl groups of the silicone resin. Furthermore, the vinyl crosslinking agent forms a three-dimensional, high-density crosslinked structure, providing excellent adhesion to the resin composition and increasing the strength of the cured product formed from the resin composition.

The vinyl crosslinking agent is preferably a silicon atom-containing compound having three or more vinyl groups in one molecule. Examples of silicon atom-containing compounds preferably include tetrakis(vinyldimethylsiloxy)silane, tris(vinyldimethylsiloxy)methylsilane, 2,4,6,8-tetramethyl-2,4,6,8-tetravinylcyclotetrasiloxane, and dimethylmethylvinylsiloxane oligomers. Of these silicon atom-containing compounds, tetrakis(vinyldimethylsiloxy)silane is more preferred from the perspective of providing excellent adhesion to the resin composition.

Furthermore, while the proportion of the vinyl crosslinking agent in the resin composition is not particularly limited, from the perspective of exhibiting excellent adhesion to the resin composition, the proportion is preferably 0.10 mass% or more, more preferably 0.30 mass% or more, and preferably 1.20 mass% or less, and more preferably 1.00 mass% or less, based on the total mass of the resin composition being 100 mass%.

### Si-H and trialkoxy group-containing siloxane

In one embodiment of the present invention, when a silicone resin is used as the matrix resin, the resin composition of the present invention is a trialkoxysilyl-containing siloxane having only one silicon-bonded hydrogen atom in one molecule and at least one trialkoxysilyl group (hereinafter referred to as "Si-H and trialkoxy group-containing siloxane").

Si-H and trialkoxy group-containing siloxanes have silicon atom-bonded hydrogen atoms, and therefore react with alkenyl group-containing silicone resins and vinyl crosslinking agents during curing by hydrosilylation reactions, and are incorporated into the cured product. In addition, Si-H and trialkoxy group-containing siloxanes have trialkoxysilyl groups that have excellent reactivity, and can improve the adhesion of the resin composition while also participating in curing by condensation reactions.

Here, the trialkoxysilyl group contained in the Si-H and trialkoxy group-containing siloxane is preferably a trimethoxysilyl group or a triethoxysilyl group. Furthermore, groups other than the silicon atom-bonded hydrogen atom and the trialkoxysilyl group in the Si-H and trialkoxy group-containing siloxane are preferably non-reactive functional groups, and more preferably are alkyl groups and aryl groups.

The Si-H and trialkoxy group-containing siloxanes are preferably compounds having the following structure.

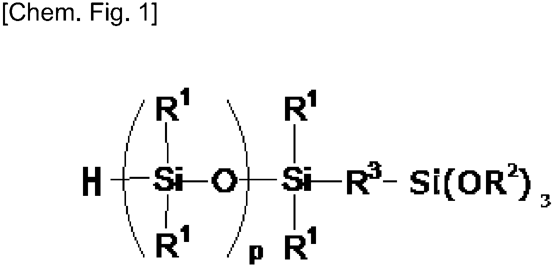

In the above formula, R¹ represents a monovalent hydrocarbon group that does not have an aliphatic unsaturated bond, and a plurality of R¹ groups may be the same or different. Furthermore, in the above formula, R² is an alkyl group, R³ is an alkylene group, and p is an integer between 1 and 50.

Examples of the monovalent hydrocarbon group not having an aliphatic unsaturated bond, represented by R¹ include: chain-like alkyl groups such as methyl groups, ethyl groups, propyl groups, butyl groups, pentyl groups, hexyl groups, heptyl groups, octyl groups, nonyl groups, decyl groups, and octadecyl groups; ring-type alkyl groups such as a cyclopentyl groups and cyclohexyl groups; aryl groups such as a phenyl groups, tolyl groups, xylyl groups, and naphthyl groups; aralkyl groups such as a benzyl groups, phenethyl groups, and phenylpropyl groups; and halogenated alkyl groups such as 3-chloropropyl groups and 3,3,3-trifloropropyl groups. Of these, alkyl groups and aryl groups are preferable, and a methyl group or phenyl group is particularly preferable.
Examples of alkyl groups constituting R² include methyl groups, ethyl groups, propyl groups, butyl groups, pentyl groups, and hexyl groups. Of these, methyl and ethyl groups are preferred.
The alkylene groups constituting R³ is preferably an alkylene group having 2 to 10 carbon atoms, and more preferably an ethylene group or a propylene group.
Furthermore, as described above, p is an integer from 1 to 50, preferably from 1 to 10, and more preferably from 1 to 5.

Furthermore, while the proportion of Si-H and trialkoxy group-containing siloxane in the resin composition is not particularly limited, from the perspective of exhibiting excellent adhesion to the resin composition, the proportion is preferably 0.05 mass% or more, more preferably 0.10 mass% or more, and preferably 1.50 mass% or less, and more preferably 1.00 mass% or less, based on the total mass of the resin composition being 100 mass%.

### Other optional components

Other optional components besides those described above include, for example, adhesion promoters, curing inhibitors, chain length extenders, and hollow fillers.

A resin composition containing an adhesion promoter can exhibit excellent adhesive properties. The adhesion promoter is not particularly limited, and examples include those described in WO 2018/043270 A1. Note that the adhesion promoter may be used individually or in a combination of two or more types in any ratio. Furthermore, from the perspective of exhibiting excellent adhesion by the resin composition, preferred examples of adhesion promoters include 3-glycidoxyprolyltrimethoxysilane, 3-glycidoxypropylmethyldimethoxysilane, 2-(3,4-epoxycyclohexyl)ethyltrimethoxysilane, 2-(3,4-epoxycyclohexyl)ethylmethyldimethoxysilane, 1,6-bis(trimethoxysilyl)hexane, 1,6-bis(triethoxysilyl)hexane, 1,4-bis(trimethoxysilyl)hexane, 1,5-bis(trimethoxysilyl)hexane, 2,5-bis(trimethoxysilyl)hexane, 1-methyldimethoxysilyl-6-trimethoxysilylhexane, 1-phenyldiethoxysilyl-6-triethoxysilylhexane, 1,6-bis(methyldimethoxysilyl)hexane, 3-methacryloxypropyltrimethoxysilane, and tetraethoxysilane. Of these, 3-glycidoxyprolyltrimethoxysilane, 1,6-bis(trimethoxysilyl)hexane, 3-methacryloxypropyltrimethoxysilane, and tetraethoxysilane are preferred from the perspective of exhibiting even better adhesion by the resin composition.
In some embodiments, from the perspective of rapidly exhibiting favorable adhesion after the resin composition has cured, the resin composition may contain both 3-methacryloxypropyltrimethoxysilane and tetraethoxysilane as adhesion promoters. In such cases, the ratio of 3-methacryloxypropyltrimethoxysilane to tetraethoxysilane is not particularly limited. For example, the mass ratio of 3-methacryloxypropyltrimethoxysilane to tetraethoxysilane (3-methacryloxypropyltrimethoxysilane:tetraethoxysilane) may be within a range of 1:1 to 1:10, or 1:1 to 1:7, or 1:1 to 1:5, or 1:1 to 1:4, or 1:2 to 1:10, or 1:2 to 1:7, or 1:2 to 1:5, or 1:2 to 1:4.
Note that the proportion of the adhesion promoter in the resin composition is not particularly limited, but from the perspective of exhibiting excellent adhesion to the resin composition, the proportion is preferably 0.50 mass% or more, more preferably 1.00 mass% or more, even more preferably 1.50 mass% or more, and preferably 5.00 mass% or less, more preferably 4.00 mass% or less, and even more preferably 3.00 mass% or less, based on the total mass of the resin composition being 100 mass%.

Curing inhibitors are components used to appropriately control the curing rate of the resin composition. If the resin composition contains a curing inhibitor, the storage stability and handling ease will be enhanced. The curing inhibitor is not particularly limited, and for example, those described in WO 2018/043270 A1 can be used. Note that the curing inhibitor may be used individually or in a combination of two or more types in any ratio. Preferred examples of the curing inhibitor include acetylene compounds such as 2-methyl-3-butyne-2-ol, 3,5-dimethyl-1-hexyne-3-ol, 2-phenyl-3-butyne-2-ol, and 1-ethynylcyclohexanol. Of these, 2-phenyl-3-butyne-2-ol is preferred.
Note that the proportion of the curing inhibitor in the resin composition is not particularly limited, but is preferably 0.10 mass% or more, more preferably 0.50 mass% or more, and preferably 4.00 mass% or less, more preferably 3.00 mass% or less, based on 100 mass% of the total mass of the resin composition.

Chain length extenders are components that participate in hydrosilylation reactions and are used to improve the elongation and flexibility of cured products. The chain length extender is not particularly limited, and for example, a linear siloxane having silicon atom-bonded hydrogen atoms only at both terminals of the molecular chain can be used, as described in WO 2020/121939 A1. Note that the chain length extender may be used individually or in a combination of two or more types in any ratio. The chain length extender is preferably 1,1,5,5-tetramethyl-3,3-diphenyltrisiloxane.
Note that the proportion of the chain length extender in the resin composition is preferably 0.10 mass% or more, more preferably 0.30 mass% or more, and preferably 4.00 mass% or less, more preferably 2.00 mass% or less, based on 100 mass% of the total mass of the resin composition.
Hollow fillers are components that can be used to reduce the specific gravity of resin compositions and/or cured products thereof. The hollow filler is not particularly limited, and any known filler having internal voids and made of glass and/or resin can be used. Note that the hollow filler may be used individually or in a combination of two or more types in any ratio. Furthermore, in the present specification, fillers corresponding to the main conductive filler (A) and the carbon-based conductive fillers (B) and (C) described above are not classified as hollow fillers, even if these fillers have an internal space like the hollow fillers and can contribute to a decrease in specific gravity.
Note that the proportion of hollow filler in the resin composition can be, for example, 0.01 mass% or more and 5.00 mass% or less, based on a total of 100 mass% of the resin composition.

### Method for producing resin composition

The resin composition of the present invention can be produced by mixing the aforementioned components. The mixing method is not particularly limited, and for example, a known mixing device may be used. Known mixing devices include, for example, monoaxial or biaxial continuous mixers, two-roller mixers, three-roller mixers, Ross mixers, Hobart mixers, Dental mixers, Planetary mixers, kneader mixers, and Henschel mixers.

### Properties of resin composition

In one embodiment of the present invention, the resin composition may be a curable resin composition, or a room-temperature curable resin composition.
Note that in the present specification, "room temperature curable" means that the resin composition can be cured at a temperature within a range of 10°C to 40°C.

In this case, if the resin composition of the present invention is a curable resin composition, the resin composition can be used as a one-component resin composition. However, in order to ensure uniform curing of both the surface and interior regardless of humidity or moisture in the atmosphere, a multi-component resin composition, and particularly preferably a two-component resin composition is preferably used.

In one embodiment of the present invention, if the resin composition is a two-solution type, solution component I and solution component II can be as follows.

### Solution component I

Solution I contains at least a silicone resin, a main conductive filler (A), a carbon-based conductive filler (B) and/or a carbon-based conductive filler (C), a hydrosilylation reaction catalyst, and a condensation reaction catalyst, but does not contain an Si-H and trialkoxy group-containing siloxane or an Si-H crosslinking agent. Note that solution component I may optionally contain a vinyl crosslinking agent.

### Solution component II

Solution II contains at least a silicone resin, a main conductive filler (A), a carbon-based conductive filler (B) and/or a carbon-based conductive filler (C), an Si-H and trialkoxy group-containing siloxane, and an Si-H crosslinking agent, but does not contain a hydrosilylation reaction catalyst or a condensation reaction catalyst. Note that solution component II may optionally contain a vinyl crosslinking agent.

The aforementioned solution component I and solution component II can be stored for a long period of time by sealing in an airtight container under moisture-proof conditions. After mixing solution component I and solution component II, the mixture can be rapidly cured at room temperature or under heating conditions of 50°C or lower to form a cured product.

Furthermore, in one embodiment of the present invention, the ratio of the number of moles of silicon-bonded hydrogen atoms to the number of moles of vinyl groups in the resin composition may be 0.70 or more, 1.05 or more, or 1.20 or more, and simultaneously 1.80 or less, or 1.60 or less, from the viewpoint of exhibiting excellent adhesion to the resin composition.

### Cured Product

The cured product of the present invention is obtained by curing the resin composition described above. The curing method and curing conditions are not particularly limited and can be appropriately selected depending on the type of matrix resin, and the like. As described above, the resin composition of the present invention suppresses filler sedimentation and an increase in viscosity. Therefore, the cured product formed using this resin composition has the main conductive filler (A) and carbon-based conductive fillers (B) and (C) evenly distributed, and can exhibit excellent conductivity.

### Uses of resin composition and cured product

Uses of the resin composition and cured product of the present invention described above are not particularly limited, but use is preferable, for example, in the field of electronic equipment and electronic components. Specifically, the resin composition and cured product are preferably used for manufacturing: internal or external electrodes of chip-type electronic components; various components (electrodes, wiring, and the like) used in RFID, electromagnetic shielding, oscillator bonding, membrane switches, touch panels, and electroluminescent devices; and various components (electrodes, cells, modules, and the like) of batteries (secondary batteries, solar cells, and the like). In one embodiment of the present invention, the electronic device contains at least one of the resin composition of the present invention described above or the cured product of the present invention. In another embodiment of the present invention, the electronic component contains at least one of the resin composition of the present invention described above or the cured product of the present invention.

### EXAMPLES

The present invention will be described below in more detail, with reference to examples, but the present invention is not limited to these examples.

### Test 1

### Evaluation and measurement methods

The following evaluation and measurement methods were used in Examples 1 to 18 and Comparative Examples 1 to 9.

### Viscosity (suppression of an increase in viscosity)

The viscosity (Pa·s) of the prepared solution component I and solution component II, as well as the resin composition immediately after mixing solution component I and solution component II, was measured at 25°C using a viscometer (Anton Paar GmbH "Rheocompass MCR302"). Note that the geometry was measured using a 20 mm diameter parallel plate with a 0.5 mm gap and a shear rate of 10 s⁻¹. Lower viscosity of the resin composition leads to suppression of an increase in viscosity of the resin composition.

### Conductivity

The resin composition obtained by mixing solution component I and solution component II was cured by compressing at 100°C for 15 minutes to obtain a cured sheet (or in other words, a sheet-like cured product). After allowing to stand at room temperature for one hour, the volume resistivity of the front and back surfaces of the resulting cured sheet was measured using a volume resistivity measuring device (4 short needles, Loresta-GP MCP-T610, manufactured by Nitto Seiko Analytech Co., Ltd.). Lower volume resistivity leads to better conductivity of the cured product.

### Conductivity after high temperature high humidity testing (only Example 17 and Comparative Example 5)

A cured sheet was prepared in the same manner as described above for "conductivity" (in addition to the sheet used for evaluating "conductivity"). The resulting cured sheet was left to stand at room temperature for 1 hour, and then the volume resistivity (elapsed time: 0 days) was measured in the same manner as for "conductivity" described above. Next, the cured sheet was subjected to high temperature high humidity conditions of 85°C and 85% RH for a set period of time (14 days, 21 days, 24 days, 30 days. Note that only Comparative Example 5 was tested on the 21st day, and only Example 17 was tested on the 24th day). After degradation, the cured sheet was left to stand at room temperature for one hour, and then the volume resistivity was measured in the same manner as described above for "conductivity". Note that the "volume resistivity" disclosed in Table 7 below is the average value of the front and back surfaces.

### Adhesion

The resin composition obtained by mixing solution component I and solution component II was sandwiched between two aluminum plates (adherends) with a thickness of 0.25 mm using a Teflon (trade mark) spacer. Furthermore, the resin composition was then allowed to cure by allowing to stand under conditions of a temperature of 25 ± 2°C and humidity of 50 ± 5% to obtain adhesive test pieces.
The tensile shear bond strength (MPa) of the obtained adhesive test pieces was measured at 168 hours and 336 hours after the completion of curing. Note that the tensile shear bond strength was measured in accordance with the method specified in JIS K 6850:1999 "Adhesives - Test method for tensile shear bond strength of rigid adherends" and at a tensile speed of 5 mm/min.

### Filler sedimentation

Prepared solution component I and solution component II, as well as the resin composition immediately after mixing solution component I and solution component II, were visually inspected for the presence or absence of filler sedimentation and evaluated according to the following criteria.
N: No filler sedimentation.
Y: Filler sedimentation.
Note that in the present invention, even if filler sedimentation is observed in at least one of solution component I and solution component II, if filler sedimentation is not observed in the resin composition obtained by mixing both solution components, the problem of suppressing filler sedimentation can be considered to have been achieved.

### Materials

The following material types were used in Examples 1 to 18 and Comparative Examples 1 to 9.
Masterbatch
   - Mixture of the following two components
      Dimethylpolysiloxane blocked with dimethylvinylsiloxy groups at both terminals of the molecular chain (viscosity: 2000 mPa·s, vinyl groups content (Vi content): 0.23 mass%): 74.0 mass%
      Fumed silica fine powder: 26.0 mass%
Matrix resin (1)
   - Dimethylpolysiloxane blocked with dimethylvinylsiloxy groups at both terminals of the molecular chain (viscosity: 2000 mPa·s, Vi content: 0.23 mass%)
Matrix resin (2)
   - Mixture of the following two components
      Dimethylpolysiloxane blocked with dimethylvinylsiloxy groups at both terminals of the molecular chain (viscosity: 2000 mPa·s, Vi content: 0.23 mass%): 68.0 mass%
      Vinyl group-containing siloxane resin expressed by formula: (CH₂=CH(CH₃)₂SiO_{0.5})₄((CH₃)₃SiO_{0.5})₄₀(SiO_{2.0})₅₆ (weight average molecular weight: 20000, Vi content: 1.6 mass%): 32.0 mass%
Main conductive filler (A)
   - Nickel-coated graphite ("E-FiLL(trade mark) #2701" produced by Metco, graphite with a nickel-coated surface, plate-like form, volume-average particle size: 100 µm)
Carbon-based conductive filler (B)
   - Carbon nanostructure ("ATHLOS(trade mark) SR1200 CNS" produced by CABOT, branched nanotube, aspect ratio: 50 or higher)
   - Carbon nanotubes ("TUBALL(trade mark) 602" produced by OCSiAl, aspect ratio: 3000 or higher)
Carbon-based conductive filler (C)
   - Carbon black (Printex(trade mark) XE2B produced by Orion Engineered Carbon, specific surface area: 1000 m²/g, aspect ratio: less than 50)
Hydrosilylation reaction catalyst
   - 1,3-Diethenyl-1,1,3,3-tetramethyldisiloxane platinum complex (platinum-based catalyst)
Condensation reaction catalyst
   - Mixture of the following three components
      Di(isopropoxy)bis(ethylacetoacetate)titanium: 78.4 mass%
      Methyltrimethoxysilane: 20.0 mass%
      Isopropanol: 1.6 mass%
Vinyl Crosslinking Agent
   - Tetrakis(vinyldimethylsiloxy)silane
Si-H crosslinking agent
   - Copolymer of dimethylsiloxane and methyl hydrogen siloxane blocked at both molecular terminals with trimethylsiloxy groups
Si-H and trialkoxy group-containing siloxane
   - Compounds having the following structure: 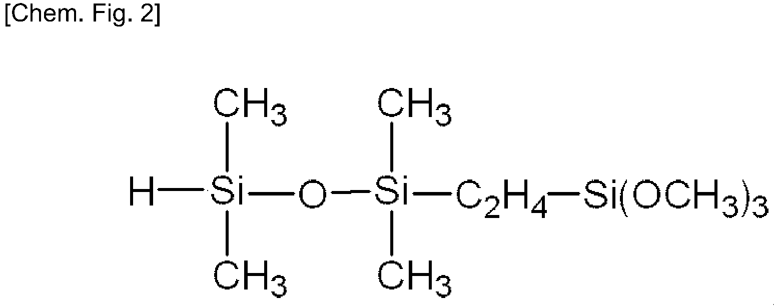
Adhesion promoter
   - Adhesion promoter (1): 1,6-bis(trimethoxysilyl)hexane
   - Adhesion promoter (2): 3-Glycidoxyprolyltrimethoxysilane
Curing inhibitor
   - 2-phenyl-3-butyn-2-ol
Chain length extender
   - 1,1,5,5-tetramethyl-3,3-diphenyltrisiloxane

### Example 1

### Preparation of solution component I

A premixture was obtained by pre-mixing 3.06 parts by mass of the masterbatch, 33.87 parts by mass of main conductive filler (A), 0.72 parts by mass of carbon-based conductive filler (C), 11.40 parts by mass of matrix resin (1), and 0.50 parts by mass of vinyl crosslinking agent. 0.20 parts by mass of the hydrosilylation reaction catalyst and 0.25 parts by mass of the condensation reaction catalyst were added to the obtained premixture, and after thorough stirring, the mixture was degassed to prepare 50.00 parts by mass of solution component I. The viscosity (suppression of an increase in viscosity) and filler sedimentation of the obtained solution component I were evaluated. The results are depicted in Table 4.

### Preparation of solution component II

A premixture was obtained by pre-mixing 3.06 parts by mass of the masterbatch, 33.69 parts by mass of main conductive filler (A), 0.72 parts by mass of carbon-based conductive filler (C), 7.13 parts by mass of matrix resin (1), 1.20 parts by mass of adhesion promoter (1), and 1.20 parts by mass of adhesion promoter (2). 0.30 parts by mass of Si-H and trialkoxy group-containing siloxane, 0.60 parts by mass of Si-H crosslinking agent, and 0.60 parts by mass of chain length extender were added to the obtained premixture, and after thorough stirring, the mixture was degassed to prepare 50.00 parts by mass of solution component II. The viscosity (suppression of an increase in viscosity) and filler sedimentation of the obtained solution component II were evaluated. The results are depicted in Table 4.

### Mixing of solution component I and solution component II

The aforementioned solution component I and solution component II were filled into two plastic cartridges manufactured by MIX-PAC, and a static nozzle (17 stage) was attached to the tip end of each cartridge. Solution component I and solution component II were mixed and dispensed simultaneously using a cartridge gun, and during this process, the viscosity of the mixture (suppression of an increase in viscosity) and filler sedimentation were quickly evaluated. Adhesion and electrical conductivity were also evaluated. The results are shown in section 4. In addition, Table 1 shows the ratio of moles of silicon atom-bonded hydrogen atoms to moles of vinyl groups in the resin composition (Si-H/Vi). Furthermore, Table 4 shows the proportion (vol.%) of various fillers contained in the resin composition.

### Examples 2 to 18 and Comparative Examples 1 to 8

Resin compositions containing solution component I and solution component II were prepared in the same manner as in Example 1, except that the materials used for preparing solution component I and solution component II were changed as shown in Tables 1 to 3. Furthermore, the two components were mixed and various evaluations were performed. The results are shown in Tables 4 to 6. Note that when a carbon-based conductive filler (B) is used in the preparation of solution component I and/or solution component II, this filler is added to the premixture in the same manner as the carbon-based conductive filler (C) in Example 1. Furthermore, when matrix resin (2) is used in the preparation of solution component I and/or solution component II, this matrix resin is added to the premixture in the same manner as matrix resin (1) in Example 1.
Furthermore, the conductivity after the high-temperature high-humidity test was also evaluated for Example 17 and Comparative Example 5. The results are depicted in Table 7.

### Comparative Example 9

An attempt was made to prepare solution component I and solution component II in the same manner as in Example 1, except that the materials used were as shown in Table 3. However, both solution component I and solution component II had excessively high viscosity and were clearly unusable. Therefore, no evaluations were conducted.

Note that in the following Tables 1 to 7:
"Filler (A)" refers to the main conductive filler (A);
"Filler (B)" refers to the carbon-based conductive filler (B);
"Filler (C)" refers to the carbon-based conductive filler (C);
"CNS" refers to carbon nanostructure (branched nanotube);
"CNT" refers to carbon nanotube;
"SiH + TAS siloxane" refers to a siloxane containing Si-H and trialkoxy groups;
"Hydrosilylation reaction catalyst" refers to a catalyst used for hydrosilylation reactions;
"Condensation reaction catalyst" refers to a catalyst used for condensation reactions;
"Solution I" refers to solution component I;
"Solution II" refers to solution component II;
"Si-H/Vi" refers to the ratio of the number of moles of silicon atom-bonded hydrogen atoms to the number of moles of vinyl groups in the resin composition;
"OVLD" means that the volume resistivity is outside the measurement range (above the upper limit);
"(B) + (C)" refers to the total proportion (vol.%) of carbon-based conductive filler (B) and carbon-based conductive filler (C);
"(A) + (B) + (C)" refers to the total proportion (vol.%) of the main conductive filler (A), carbon-based conductive filler (B), and carbon-based conductive filler (C); and
"(C)/(B)" represents the proportion (multiple) of the carbon-based conductive filler (C) to the carbon-based conductive filler (B) by volume.

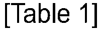

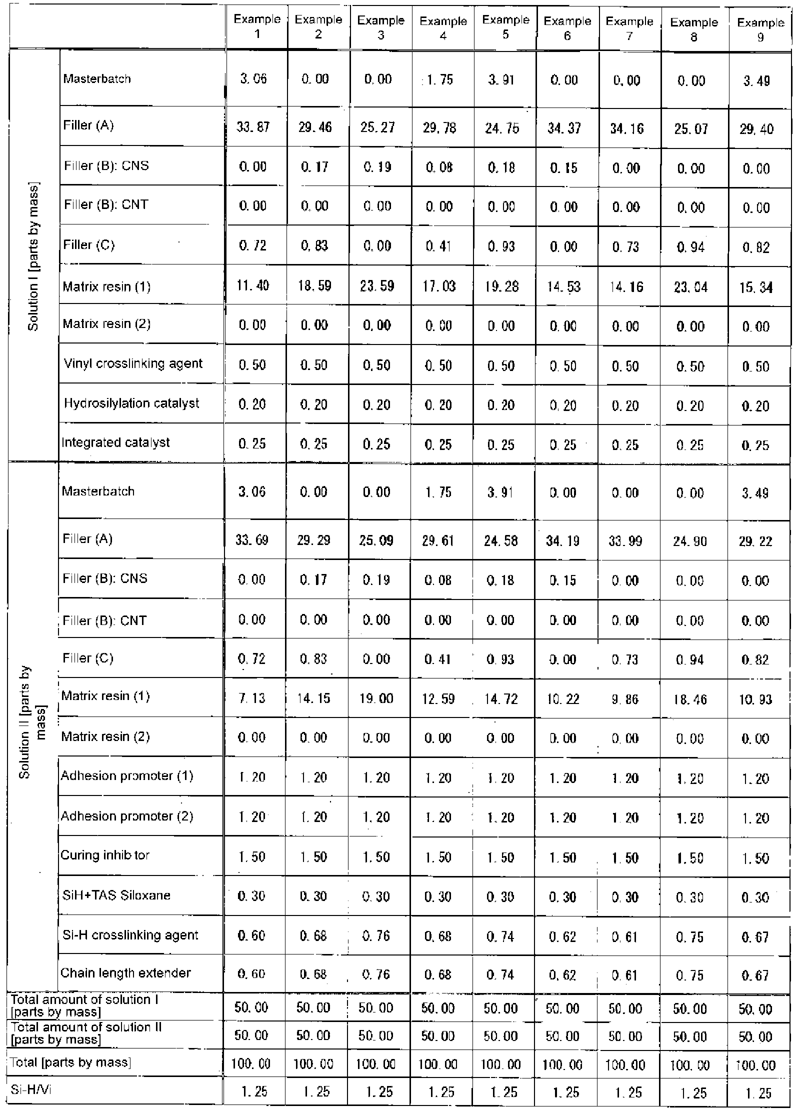

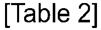

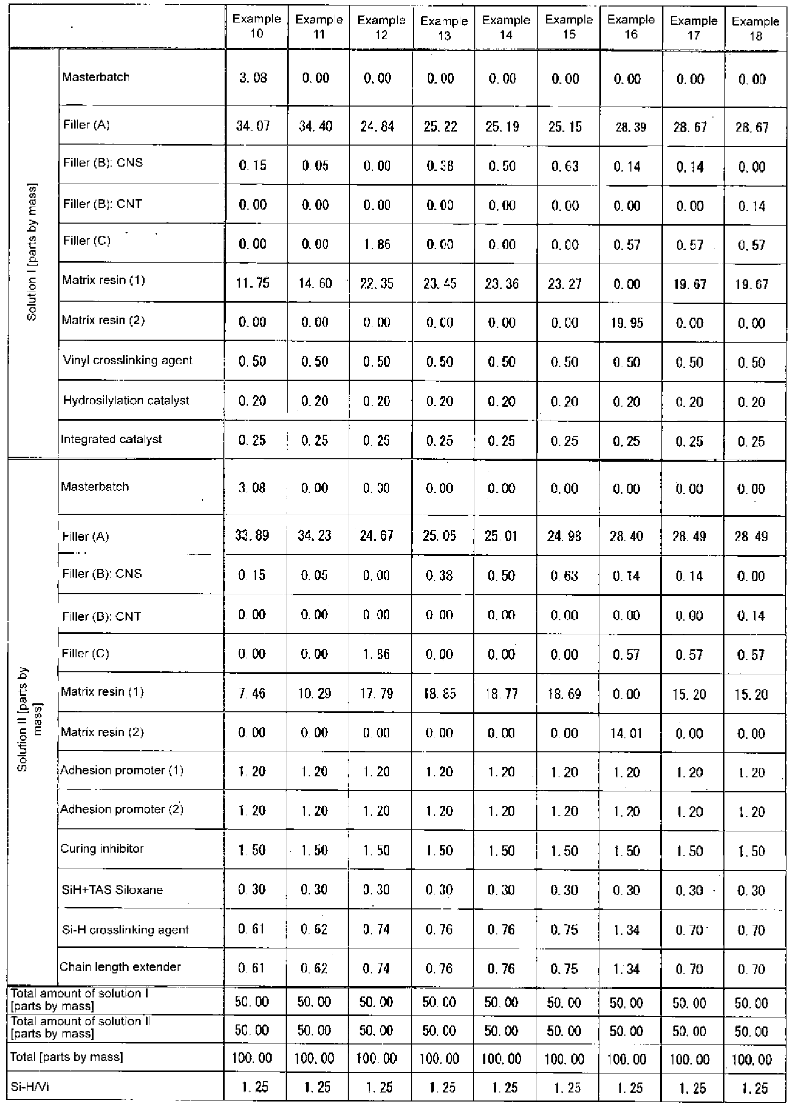

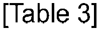

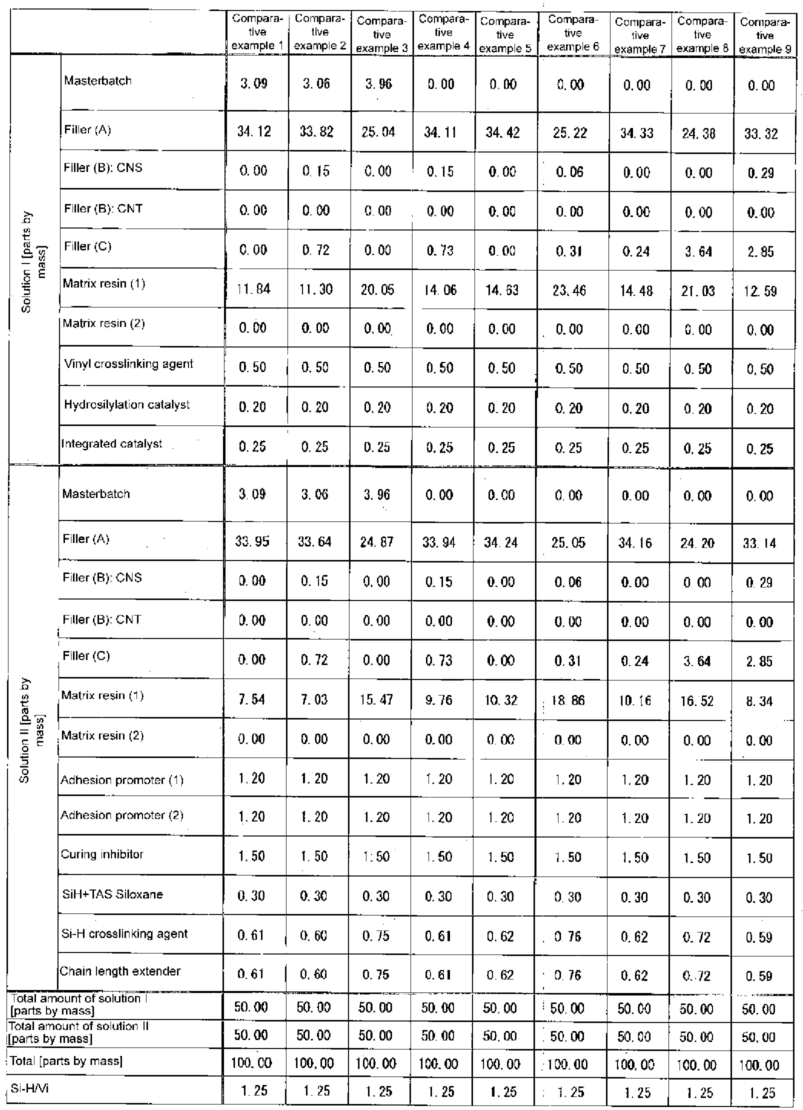

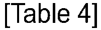

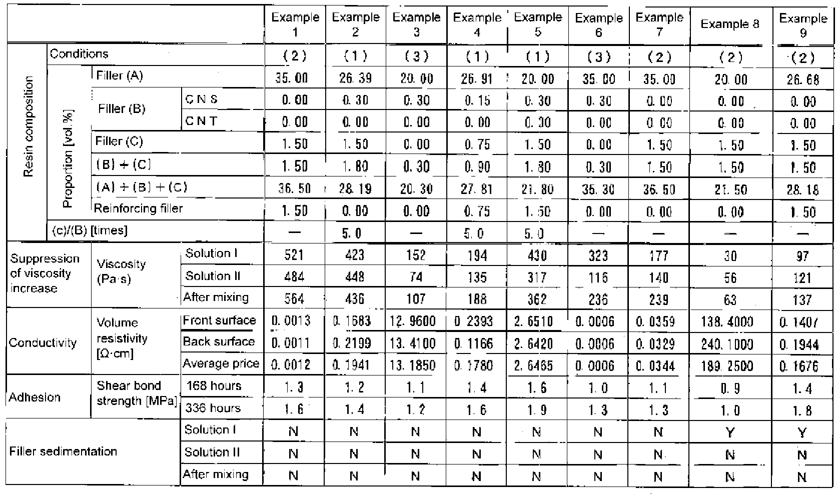

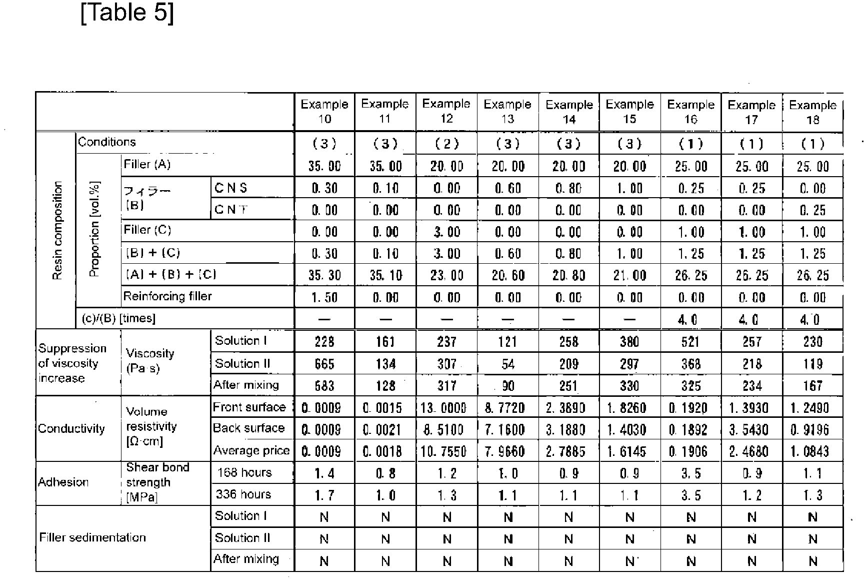

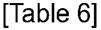

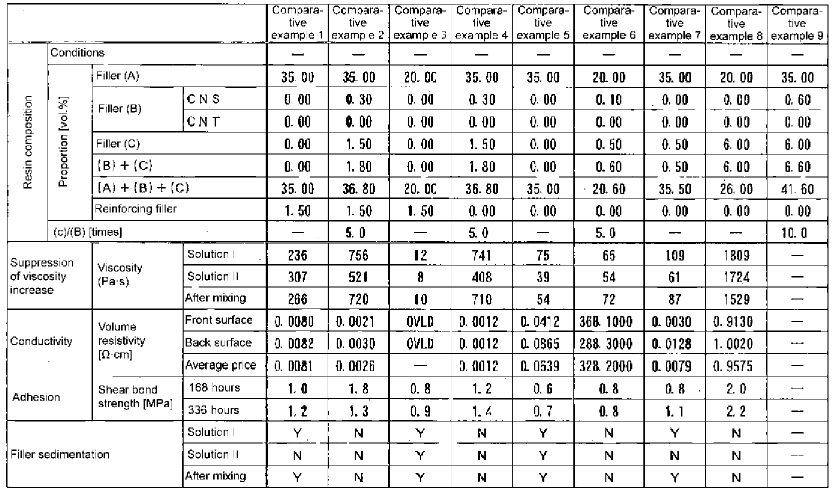

**[Table 7]**

| Elapsed time [days] | | 0 | 14 | 21 | 24 | 30 |
|---|---|---|---|---|---|---|
| Example 17 | Volume resistivity [Ω·cm] | 2.9103 | 6. 2100 | - | 7.4460 | 6. 6630 |
| | Change in volume resistivity [%] based on a 10-day timeframe | 100.0 | 213. 4 | - | 255.9 | 228. 9 |
| Comparative Example 5 | Volume resistivity [Ω·cm] | 0. 0639 | 0. 2264 | 0.1579 | - | 1.5132 |
| | Change in volume resistivity [%] based on a 10-day timeframe | 100. 0 | 354. 6 | 247. 2 | - | 2369. 9 |

Tables 4 and 5 show that the resin compositions of Examples 2, 4, 5, 16, 17, and 18, which contain a matrix resin and a prescribed proportion of main conductive filler (A) and satisfy condition (1), suppress filler sedimentation and have sufficiently low viscosity, thus suppressing an increase in viscosity. Furthermore, the cured product formed from the resin composition clearly has excellent conductivity and adhesion.
Tables 4 and 5 show that the resin compositions of Examples 1, 7 to 9, and 12, which contain a matrix resin and a prescribed proportion of main conductive filler (A) and satisfy condition (2), suppress filler sedimentation and have sufficiently low viscosity, thus suppressing an increase in viscosity. Furthermore, the cured product formed from the resin composition clearly has excellent conductivity and adhesion.
Tables 4 and 5 show that the resin compositions of Examples 3, 6, 10, 11, and 13 to 15, which contain a matrix resin and a prescribed proportion of main conductive filler (A) and satisfy condition (3), suppress filler sedimentation and have sufficiently low viscosity, thus suppressing an increase in viscosity. Furthermore, the cured product formed from the resin composition clearly has excellent conductivity and adhesion.

Table 6 shows that the resin compositions of Comparative Examples 1, 3, and 5, which do not contain either of the carbon-based conductive fillers (B) or (C), cannot suppress filler sedimentation.
Table 6 shows that the resin compositions of Comparative Examples 2 and 4, which contain both carbon-based conductive fillers (B) and (C) but where the total proportion of the main conductive filler (A) and the carbon-based conductive fillers (B) and (C) is 36.50 vol.% or more, exhibit increased viscosity and an increase in viscosity of the material is not suppressed.
Table 6 shows that Comparative Example 6, which uses a resin composition containing both carbon-based conductive fillers (B) and (C) but where the proportion of carbon-based conductive filler (B) is 0.10 vol.% or less and the total proportion of the main conductive filler (A) and carbon-based conductive fillers (B) and (C) is 20.60 vol.% or less, had increased volume resistivity of the cured product and reduced conductivity.
Table 6 shows that the resin composition of Comparative Example 7, which contains the carbon-based conductive filler (C) but the proportion of the carbon-based conductive filler (C) is 1.00 vol.% or less, did not suppress filler sedimentation.
Table 6 shows that the resin composition of Comparative Example 8, which contains the carbon-based conductive filler (C) but where the proportion of the carbon-based conductive filler (C) is 6.00 vol.% or more, had increased viscosity and an increase in viscosity was not suppressed.
Note that as described above, Comparative Example 9, shown in Table 6, was not evaluated.

Furthermore, Table 7 shows that the cured product of Example 17, which is formed from a resin composition containing the matrix resin and a prescribed proportion of the main conductive filler (A) and satisfying condition (1), can maintain relatively good conductivity even when exposed to high temperature high humidity conditions for a long period of time.

### Test 2

### Evaluation and measurement methods

Evaluations and measurement methods similar to Test 1 were used for Examples 19 to 28.
In addition, the evaluation of "adhesion" measured not only the shear bond strength (MPa) at 168 hours and 336 hours after the completion of curing, but also the shear bond strength (MPa) 6 hours after completion of curing.

### Materials

The following material types were used in Examples 19 to 28.
Main conductive filler (A)
   - Nickel-coated graphite ("E-FiLL(trade mark) #2701" produced by Metco), graphite with a nickel-coated surface, plate-like form, volume-average particle size: 100 µm)
Main conductive filler (A2)
   - Nickel-coated graphite ("VNCG-085" produced by Weber, graphite with a nickel-coated surface, plate-like form, volume average particle size: 85 µm)
Carbon-based conductive filler (B)
   - Carbon nanostructure ("ATHLOS(trade mark) SR1200 CNS" produced by CABOT, branched nanotube, aspect ratio: 50 or higher)
Carbon-based conductive filler (C)
   - Carbon black (Printex(trade mark) XE2B produced by Orion Engineered Carbon, specific surface area: 1000 m²/g, aspect ratio: less than 50)
Matrix resin (2)
   - Mixture of the following two components
      Dimethylpolysiloxane blocked with dimethylvinylsiloxy groups at both terminals of the molecular chain (viscosity: 2000 mPa·s, Vi content: 0.23 mass%): 68.0 mass%
      Vinyl group-containing siloxane resin expressed by formula: (CH₂=CH(CH₃)₂SiO_{0.5})₄((CH₃)₃SiO_{0.5})₄₀(SiO_{2.0})₅₆ (weight average molecular weight: 20000, Vi content: 1.6 mass%): 32.0 mass%
Vinyl Crosslinking Agent
   - Tetrakis(vinyldimethylsiloxy)silane
Hydrosilylation reaction catalyst
   - 1,3-Diethenyl-1,1,3,3-tetramethyldisiloxane platinum complex (platinum-based catalyst)
Condensation reaction catalyst
   - Mixture of the following three components
      Di(isopropoxy)bis(ethylacetoacetate)titanium: 78.4 mass% Methyltrimethoxysilane: 20.0 mass%
      Isopropanol: 1.6 mass%
Condensation reaction catalyst (2)
   - Tetra(t-butoxy)titanium
Masterbatch (2)
   - Mixture of the following three components
      Aluminum trisacetylacetonate: 20.0 mass% (condensation reaction catalyst) Vinyl group-containing siloxane resin expressed by formula: (CH₂=CH(CH₃)₂SiO_{0.5})₄((CH₃)₃SiO_{0.5})₄₀(SiO_{2.0})₅₆ (weight average molecular weight: 20000, Vi content: 1.6 mass%): 22.0 mass%
      Dimethylpolysiloxane blocked with dimethylvinylsiloxy groups at both terminals of the molecular chain (viscosity: 2000 mPa·s, Vi content: 0.23 mass%): 58.0 mass%
Adhesion promoter
   - Adhesion promoter (1): 1,6-Bis(trimethoxysilyl)hexane
   - Adhesion promoter (2): 3-Glycidoxyprolyltrimethoxysilane
   - Adhesion promoter (3): 3-Methacryloxypropyltrimethoxysilane
   - Adhesion promoter (4): Tetraethoxysilane
Curing inhibitor
   - 2-Phenyl-3-butyn-2-ol
Si-H and trialkoxy group-containing siloxane
   - Compounds having the following structure: 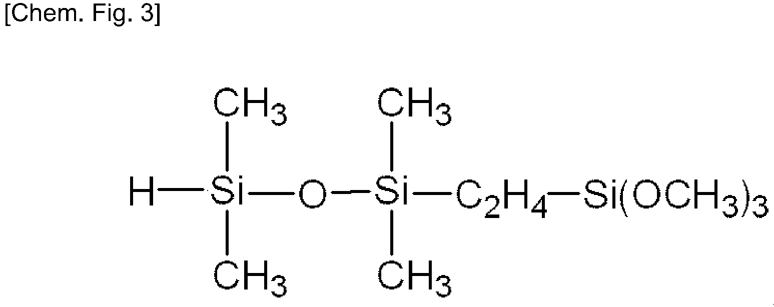
Si-H crosslinking agent
   - Copolymer of dimethylsiloxane and methyl hydrogen siloxane blocked at both molecular terminals with trimethylsiloxy groups
Si-H crosslinking agent (2)
   - Methylhydrogenpolysiloxane blocked at both molecular terminals with trimethylsiloxy groups (MD^{H}₁₀M)
Si-H crosslinking agent (3)
   - Methylhydrogenpolysiloxane blocked at both molecular terminals with trimethylsiloxy groups (MD^{H}₅₀M)
Chain length extender
   - 1,1,5,5-tetramethyl-3,3-diphenyltrisiloxane

### Examples 19 to 28

Resin compositions containing solution component I and solution component II were prepared in the same manner as in Test 1, except that the materials used for preparing solution component I and solution component II were changed as shown in Tables 8 and 9. Furthermore, the two components were mixed and various evaluations similar to Test 1 were performed. The results are shown in Tables 8 and 9.

Note that in Tables 8 and 9 shown below:
"Filler (A)" refers to the main conductive filler (A);
"Filler (A2)" refers to the main conductive filler (A2);
"Filler (B)" refers to the carbon-based conductive filler (B);
"Filler (C)" refers to the carbon-based conductive filler (C);
"CNS" refers to carbon nanostructure (branched nanotube);
"SiH + TAS siloxane" refers to a siloxane containing Si-H and trialkoxy groups;
"Hydrosilylation reaction catalyst" refers to a catalyst used for hydrosilylation reactions;
"Condensation reaction catalyst" refers to a catalyst used for condensation reactions;
"Solution I" refers to solution component I;
"Solution II" refers to solution component II;
"Si-H/Vi" refers to the ratio of the number of moles of silicon atom-bonded hydrogen atoms to the number of moles of vinyl groups in the resin composition;
"(B) + (C)" refers to the total proportion (vol.%) of carbon-based conductive filler (B) and carbon-based conductive filler (C);
"(A) + (B) + (C)" refers to the total proportion (vol.%) of the main conductive filler (A), carbon-based conductive filler (B), and carbon-based conductive filler (C); and
"(C)/(B)" represents the proportion (multiple) of the carbon-based conductive filler (C) to the carbon-based conductive filler (B) by volume.

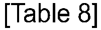

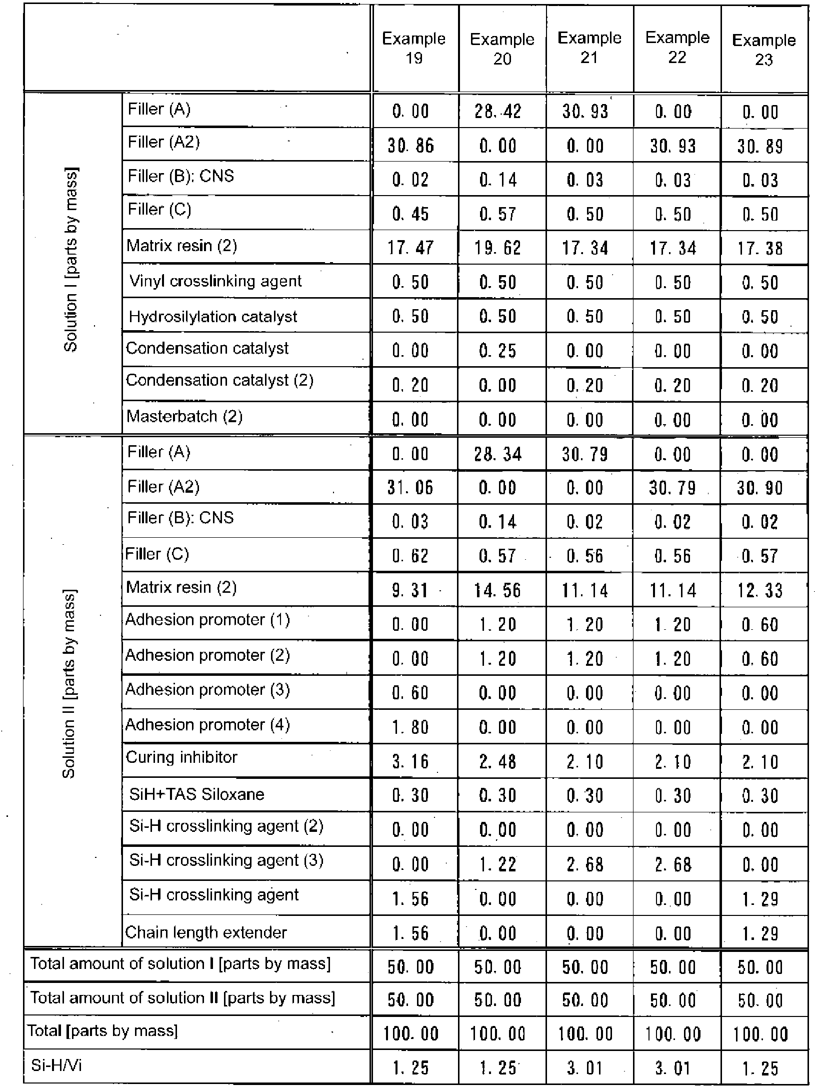

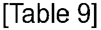

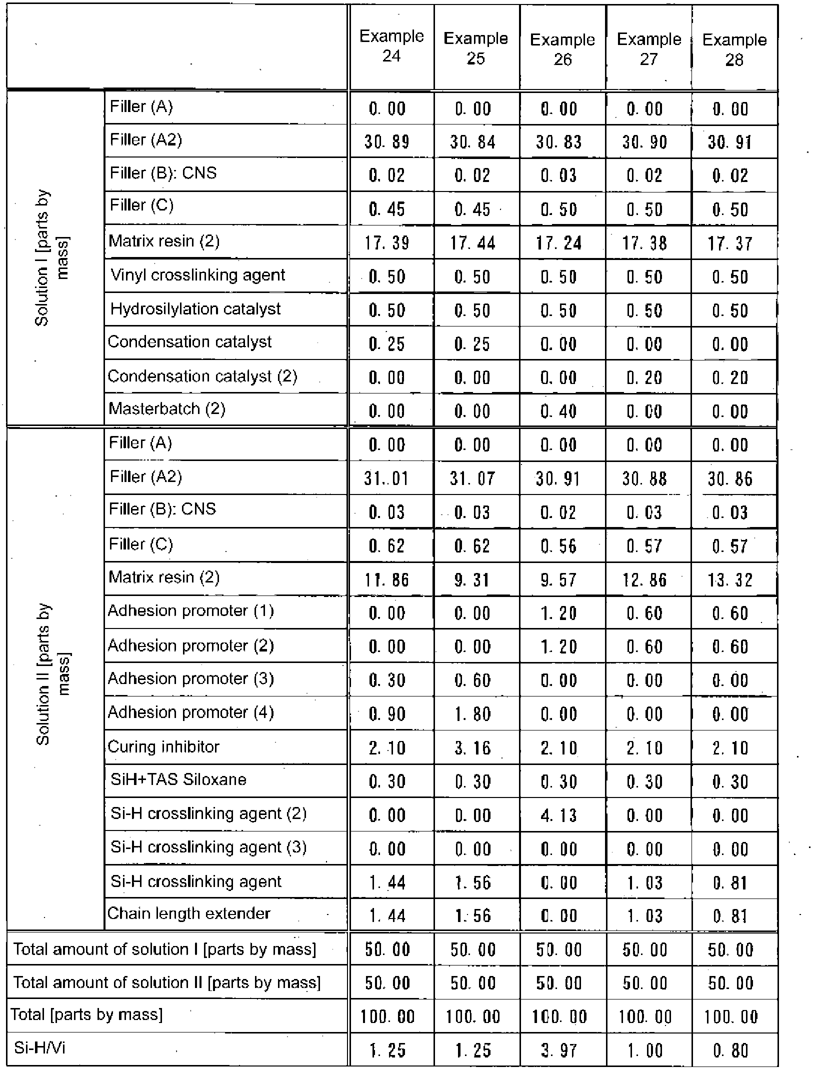

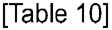

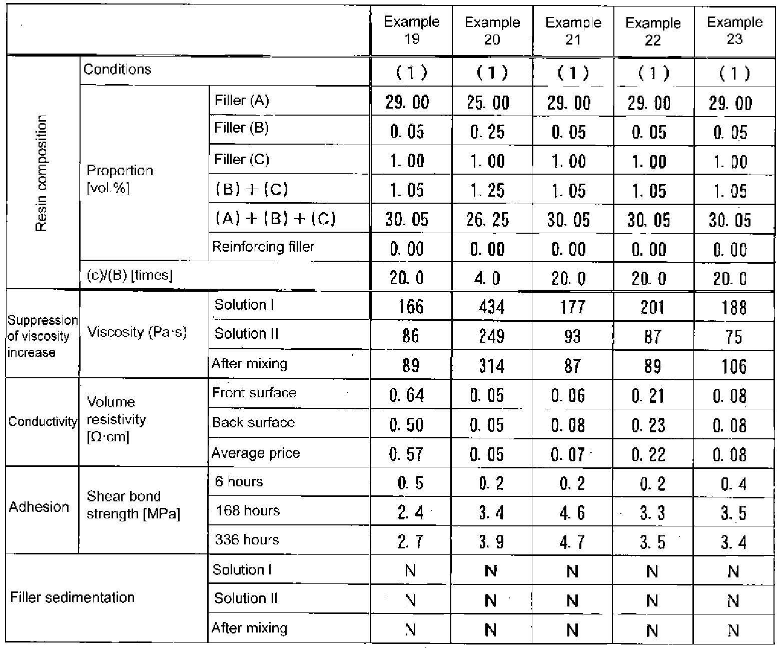

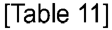

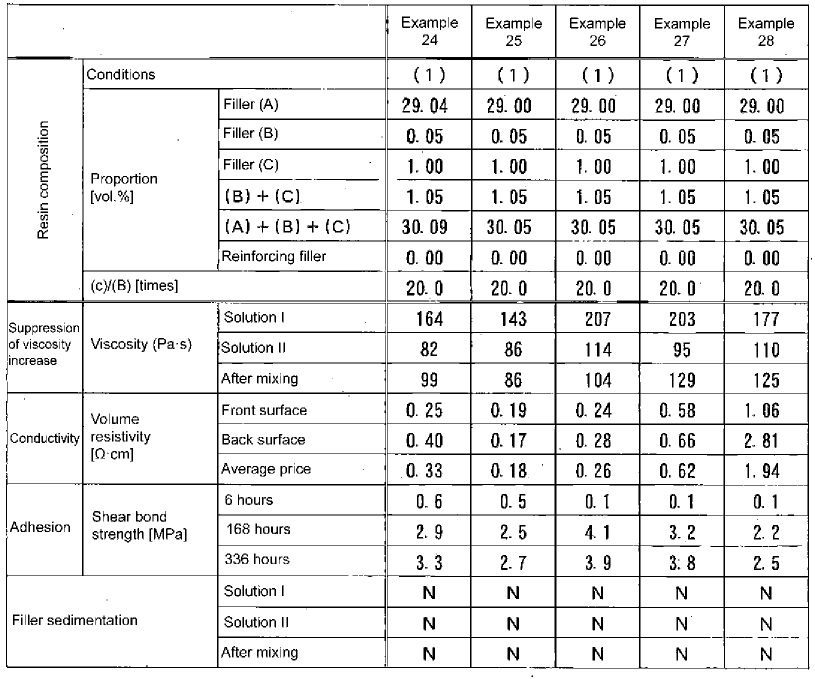

Tables 10 and 11 show that the resin compositions of Examples 19 to 28, which contain a matrix resin and a prescribed proportion of main conductive filler (A) and satisfy condition (1), suppress filler sedimentation and have sufficiently low viscosity, thus suppressing an increase in viscosity. Furthermore, the cured product formed from the resin composition clearly has excellent conductivity and adhesion.

### Test 3

### Evaluation and measurement methods

The following evaluation and measurement methods were used for Examples 29 and 30.

### Viscosity (suppression of an increase in viscosity)

The viscosity (Pa·s) of the resin composition immediately after mixing solution component I and solution component II was measured at 25°C using a viscometer (Anton Paar GmbH "Rheocompass MCR302"). Note that the geometry was measured using a 20 mm diameter parallel plate with a 0.5 mm gap and a shear rate of 10 s⁻¹. Lower viscosity of the resin composition leads to suppression of an increase in viscosity of the resin composition.

### Conductivity (Wrap Shear Resistance)

The resin composition obtained by mixing solution component I and solution component II was sandwiched between two aluminum plates (adherends) with a thickness of 0.25 mm using a spacer. Furthermore, the resin composition was then allowed to cure by allowing to stand under conditions of a temperature of 25 ± 2°C and humidity of 50 ± 5% to obtain test pieces. The lap shear resistance (Ω) of the obtained test piece was measured using a resistance meter (RM3544) from HIOKI Corporation. A lower wrap shear resistance enhances the conductivity of the cured product.

### Adhesion

The resin composition obtained by mixing solution component I and solution component II was sandwiched between two aluminum plates (adherends) with a thickness of 0.25 mm using a spacer. Furthermore, the resin composition was then allowed to cure by allowing to stand under conditions of a temperature of 25 ± 2°C and humidity of 50 ± 5% to obtain adhesive test pieces.
The tensile shear bond strength (MPa) of the obtained adhesive test piece was measured 168 hours after completion of curing. Note that the tensile shear bond strength was measured in accordance with the method specified in JIS K 6850:1999 "Adhesives - Test method for tensile shear bond strength of rigid adherends" and at a tensile speed of 5 mm/min.

### Filler sedimentation

The resin composition immediately after mixing solution component I and solution component II was visually inspected for the presence or absence of filler sedimentation and evaluated according to the following criteria.
N: No filler sedimentation.
Y: Filler sedimentation.

### Materials

The following material types were used in the following Examples 29 and 30.
Epoxy resin (matrix resin)
   - Bisphenol A type epoxy resin ("D.E.R. 331" produced by Olin, epoxy equivalent: 182 to 192, viscosity: 11000 to 14000 mPa·s)
   - Long-chain polyglycol type bifunctional solution epoxy resin ("D.E.R. 732" produced by Olin, epoxy equivalent: 310 to 330, viscosity: 60 to 70 mPa·s)
Curing agent (crosslinking agent)
   - Curing agent (1): Pentaethylenehexamine (produced by Sigma-Aldrich)
   - Curing agent (2): 4',4'-methylenebis(2-methylcyclohexylamine), isomer mixture (produced by Sigma-Aldrich)
Adhesion promoter
   - Adhesion promoter (5): 3-(trimethoxysilyl)-1-propylamine
   - Adhesion promoter (6): "EP0409" produced by Hybrid Plastics, (hydrolyzate of trimethoxy[3-(oxiran-2-ylmethoxy)propyl]silane)
Main conductive filler (A)
   - Nickel-coated graphite ("E-FiLL(trade mark) #2701" produced by Metco), graphite with a nickel-coated surface, plate-like form, volume-average particle size: 100 µm)
Carbon-based conductive filler (B)
   - Carbon nanostructure ("ATHLOS(trade mark) SR1200 CNS" produced by CABOT, branched nanotube, aspect ratio: 50 or higher)
Carbon-based conductive filler (C)
   - Carbon black (Printex(trade mark) XE2B produced by Orion Engineered Carbon, specific surface area: 1000 m²/g, aspect ratio: less than 50)

### Example 29

### Preparation of solution component I

24.50 parts by mass of bisphenol A type epoxy resin, 8.35 parts by mass of long-chain polyglycol type bifunctional solution epoxy resin, 0.10 parts by mass of adhesion promoter (6), 2.00 parts by mass of carbon-based conductive filler (C), and 54.65 parts by mass of main conductive filler (A) were mixed and sufficiently stirred to obtain 89.60 parts by mass of solution component I.

### Preparation of solution component II

6.14 parts by mass of curing agent (1), 2.58 parts by mass of curing agent (2), and 1.69 parts by mass of adhesion promoter (5) were mixed and sufficiently stirred to obtain 10.41 parts by mass of solution component II.

### Mixing of solution component I and solution component II

Solution component I and solution component II prepared as described above were mixed in a plastic container and stirred using a rotating revolution mixer from Thinky Co., Ltd. After stirring, the viscosity (suppression of increased viscosity) and filler sedimentation of the mixture were quickly evaluated. Adhesion and electrical conductivity were also evaluated. The results are depicted in Table 12.

### Example 30

### Preparation of solution component I

26.14 parts by mass of bisphenol A type epoxy resin, 0.50 parts by mass of carbon-based conductive filler (C), 0.02 parts by mass of carbon-based conductive filler (B), and 19.97 parts by mass of main conductive filler (A) were mixed and sufficiently stirred to obtain 46.63 parts by mass of solution component I.

### Preparation of solution component II

13.99 parts by mass of curing agent (2), 3.12 parts by mass of adhesion promoter (5), 1.30 parts by mass of carbon-based conductive filler (C), and 34.95 parts by mass of main conductive filler (A) were mixed and sufficiently stirred to obtain 53.36 parts by mass of solution component II.

### Mixing of solution component I and solution component II

Solution component I and solution component II prepared as described above were mixed in a plastic container and stirred using a rotating revolution mixer from Thinky Co., Ltd. After stirring, the viscosity (suppression of increased viscosity) and filler sedimentation of the mixture were quickly evaluated. Adhesion and electrical conductivity were also evaluated. The results are depicted in Table 12.

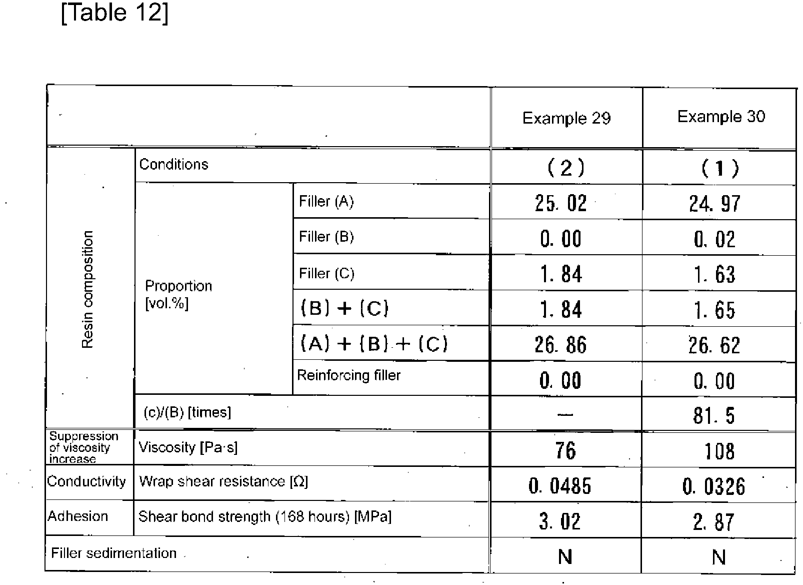

Table 12 shows that the resin composition of Example 29, which contains a matrix resin and a prescribed proportion of main conductive filler (A) and satisfies condition (2), suppresses filler sedimentation and has sufficiently low viscosity, thus suppressing an increase in viscosity. Furthermore, the cured product formed from the resin composition clearly has excellent conductivity and adhesion.
Table 12 shows that the resin composition of Example 30, which contains a matrix resin and a prescribed proportion of main conductive filler (A) and satisfies condition (1), suppresses filler sedimentation and has sufficiently low viscosity, thus suppressing an increase in viscosity. Furthermore, the cured product formed from the resin composition clearly has excellent conductivity and adhesion.

### Test 4

### Evaluation and measurement methods

The following evaluation and measurement methods were used for Examples 31 and 32.

### Viscosity (suppression of an increase in viscosity)

The viscosity (Pa·s) of the resin composition immediately after mixing all of the components was measured at 25°C using a viscometer (Anton Paar GmbH "Rheocompass MCR302"). Note that the geometry was measured using a 20 mm diameter parallel plate with a 0.5 mm gap and a shear rate of 10 s⁻¹. Lower viscosity of the resin composition leads to suppression of an increase in viscosity of the resin composition.

### Conductivity (Wrap Shear Resistance)

The resin composition obtained by mixing all of the components was sandwiched between two aluminum plates (adherends) with a thickness of 0.25 mm using a spacer. Furthermore, the resin composition was then allowed to cure by allowing to stand under conditions of a temperature of 25 ± 2°C and humidity of 50 ± 5% to obtain test pieces. The lap shear resistance (Ω) of the obtained test piece was measured using a resistance meter (RM3544) from HIOKI Corporation. A lower wrap shear resistance enhances the conductivity of the cured product.

### Adhesion

The resin composition obtained by mixing all of the components was sandwiched between two aluminum plates (adherends) with a thickness of 0.25 mm using a spacer. Furthermore, the resin composition was then allowed to cure by allowing to stand for 7 days under conditions of a temperature of 25 ± 2°C and a humidity of 50 ± 5% to obtain adhesive test pieces.
The tensile shear bond strength (MPa) was measured for the obtained adhesive test pieces. Note that the tensile shear bond strength was measured in accordance with the method specified in JIS K 6850:1999 "Adhesives - Test method for tensile shear bond strength of rigid adherends" and at a tensile speed of 50 mm/min.

### Filler sedimentation

The resin composition immediately after mixing all of the components was visually inspected for the presence or absence of filler sedimentation and evaluated according to the following criteria.
N: No filler sedimentation.
Y: Filler sedimentation.

### Materials

The following material types were used in the following Examples 31 and 32.
Polyol
   - Polyol T-3000 (polyethertriol with a molecular weight of 3000)
Polyisocyanate
   - PAPI (Trade mark) Polymeric MDI (Polymethylene phenylene isocyanate)
Curing catalyst
   - Tin(II) 2-ethylhexanoate
Main conductive filler (A)
   - Nickel-coated graphite ("VNCG-085" produced by Weber, graphite with a nickel-coated surface, plate-like form, volume average particle size: 85 µm)
Carbon-based conductive filler (B)
   - Carbon nanostructure ("ATHLOS(trade mark) SR1200 CNS" produced by CABOT, branched nanotube, aspect ratio: 50 or higher)
Carbon-based conductive filler (C)
   - Carbon black (Printex(trade mark) XE2B produced by Orion Engineered Carbon, specific surface area: 1000 m²/g, aspect ratio: less than 50)

### Example 31

### Preparation of resin composition

19.87 parts by mass of polyol and 54.00 parts by mass of main conductive filler (A) were mixed and stirred. 2.13 parts by mass of carbon-based conductive filler (C) was added to the resulting mixture, mixed and stirred, 23.95 parts by mass of polyisocyanate was added and mixed, followed by addition of 0.05 parts by mass of curing catalyst, and finally the mixture was stirred using a mixer. After stirring, the viscosity (suppression of increased viscosity) and filler sedimentation of the composition were quickly evaluated. Adhesion and electrical conductivity were also evaluated. The results are presented in Table 13.

### Example 32

### Preparation of resin composition

19.86 parts by mass of polyol, 54.00 parts by mass of main conductive filler (A), and 0.02 parts by mass of carbon-based conductive filler (B) were mixed and stirred. 2.13 parts by mass of carbon-based conductive filler (C) was added to the resulting mixture, mixed and stirred, 23.93 parts by mass of polyisocyanate was added and mixed, followed by addition of 0.05 parts by mass of curing catalyst, and finally the mixture was stirred using a mixer. After stirring, the viscosity (suppression of increased viscosity) and filler sedimentation of the composition were quickly evaluated. Adhesion and electrical conductivity were also evaluated. The results are presented in Table 13.

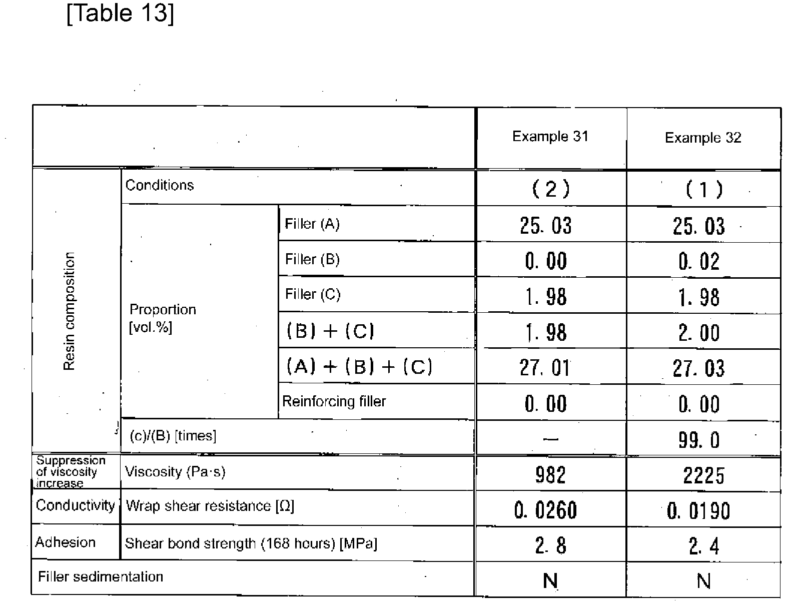

Table 13 shows that the resin composition of Example 31, which contains a matrix resin and a prescribed proportion of main conductive filler (A) and satisfies condition (2), suppresses filler sedimentation and has sufficiently low viscosity, thus suppressing an increase in viscosity. Furthermore, the cured product formed from the resin composition clearly has excellent conductivity and adhesion.
Table 13 shows that the resin composition of Example 32, which contains a matrix resin and a prescribed proportion of main conductive filler (A) and satisfies condition (1), suppresses filler sedimentation and has sufficiently low viscosity, thus suppressing an increase in viscosity. Furthermore, the cured product formed from the resin composition clearly has excellent conductivity and adhesion.
Note that in Examples 31 and 32, the viscosity values of the resin compositions were greater than those of the resin compositions containing silicone resin or epoxy resin (Tests 1 to 3). However, the viscosity of the resin compositions of Examples 31 and 32 is such that an increase in viscosity is sufficiently suppressed, even though they contain urethane resin, and they can be easily compressed in practical use.

### INDUSTRIAL APPLICABILITY

The present invention provides a resin composition that suppresses filler sedimentation and an excessive increase in viscosity, and exhibits excellent conductivity, as well as a cured product obtained by curing the resin composition.

## Claims

1. A resin composition, comprising: a matrix resin, and a main conductive filler (A) having a metal on at least a portion of the surface, wherein
the proportion of the main conductive filler (A) is 19.80 vol.% or more and 35.20 vol.% or less when the total volume of the resin composition is 100 vol.%, and
the following conditions (1), (2), or (3) are satisfied.
Condition (1): The resin composition contains both a carbon-based conductive filler (B) with an aspect ratio of 50 or more and a carbon-based conductive filler (C) with a specific surface area of 10 m²/g or more;
when the total volume of the resin composition is 100 vol.%,
the proportion of the carbon-based conductive filler (B) is 0.01 vol.% or more and less than 1.00 vol.%,
the proportion of the carbon-based conductive filler (C) is greater than 0.10 vol.% and less than 2.00 vol.%, and
the total of the proportion of the main conductive filler (A), the proportion of the carbon-based conductive filler (B), and the proportion of the carbon-based conductive filler (C) is greater than 20.60 vol.% and less than 36.50 vol.%;
Condition (2): The resin composition contains a carbon-based conductive filler (C) with a specific surface area of 10 m²/g or more, and does not contain a carbon-based conductive filler (B) with an aspect ratio of 50 or more;
when the total volume of the resin composition is 100 vol.%,
the proportion of the carbon-based conductive filler (C) is greater than 1.00 vol.% and less than 6.00 vol.%,
the total of the proportion of the main conductive filler (A) and the proportion of the carbon-based conductive filler (C) is greater than 21.00 vol.% and less than 38.00 vol.%;
Condition (3): The resin composition contains a carbon-based conductive filler (B) with an aspect ratio of 50 or more, and does not contain a carbon-based conductive filler (C) with a specific surface area of 10 m²/g or more, and
when the total volume of the resin composition is 100 vol.%,
the proportion of the carbon-based conductive filler (B) is 0.10 vol.% or more and less than 2.50 vol.%, and
the total of the proportion of the main conductive filler (A) and the proportion of the carbon-based conductive filler (B) is greater than 20.20 vol.% and less than 36.00 vol.%.

2. The resin composition according to claim 1, wherein the main conductive filler (A) contains nickel-coated graphite.

3. The resin composition according to claim 1, wherein the carbon-based conductive filler (B) contains a carbon nanostructure.

4. The resin composition according to claim 1, wherein the carbon-based conductive filler (C) contains carbon black.

5. The resin composition according to claim 1, wherein the matrix resin contains at least one type selected from the group consisting of silicone resin, epoxy resin, acrylic resin, polyolefin oxide resin, and urethane resin.

6. The resin composition according to claim 1, wherein the matrix resin contains at least one type selected from the group consisting of silicone resin, epoxy resin, and urethane resin.

7. The resin composition according to claim 1, further comprising a curing catalyst capable of curing the matrix resin.

8. The resin composition according to claim 1, further comprising a reinforcing filler.

9. The resin composition according to claim 1, further comprising an adhesion promoter, wherein the adhesion promoter contains both 3-methacryloxypropyltrimethoxysilane and tetraethoxysilane.

10. The resin composition according to claim 1, satisfying the above condition (1) or (2).

11. The resin composition according to claim 1, satisfying the above condition (1).

12. The resin composition according to claim 1, which is a two-component type.

13. The resin composition according to any one of claims 1 to 12, which is curable.

14. The resin composition according to any one of claims 1 to 12, which is curable at room temperature.

15. A cured product, obtained by curing the resin composition according to claim 13.
